# EUROPÄISCHE PATENTANMELDUNG

(11) **EP 4 745 061 A2**
(43) Veröffentlichungstag der Anmeldung: **20.05.2026**
(21) Anmeldenummer: 26154562.8
(22) Anmeldetag: 11.12.2019
(51) Int. Cl.: B65G 43/08

(54) **VORRICHTUNG MIT ELEKTROMOTOR ZUM BEREITSTELLEN VON VERPACKUNGSMATERIAL UND VERFAHREN ZUM BETREIBEN EINER VERPACKUNGSMATERIALBEREITSTELLUNGSVORRICHTUNG**

(30) Priorität: 11.12.2018 DE 102018009733
(62) Teilanmeldung aus: 19821064.3
(71) Anmelder: SPRICK GMBH BIELEFELDER PAPIER- UND WELLPAPPENWERKE & CO., 33607 Bielefeld (DE)
(72) Erfinder: SCHWARBERG, Marco, 49324 Melle (DE); SCHALK, Bastian, 32758 Detmold (DE); KREBS, Vitali, 59227 Ahlen (DE)
(74) Vertreter: Schmid, Nils T.F.

(57) **Zusammenfassung**

Diese Erfindung betrifft eine Vorrichtung zum Bereitstellen von Verpackungsmaterial, wie einen Wellpappenbahnabschnitt oder einen Papierpolstermaterialstrang, durch Manipulation, insbesondere Umformen, Fördern und/oder Abtrennen, eines Faserausgangsmaterials, wie einer ein- oder mehrlagigen Papierbahn oder einer Wellpappenbahn, umfassend wenigstens eine mechanisch anzutreibende Arbeitseinrichtung, wie eine Deformationseinrichtung, insbesondere ein Deformationsradpaar, eine Fördereinrichtung, insbesondere ein, oder eine Ablängvorrichtung, insbesondere ein Rotationsschneider oder ein Translationsschneider; wenigstens einen die Arbeitseinrichtung antreibenden Elektromotor mit einem ortsfesten Stator, einem dazu beweglich gelagerten Rotor und einer mit einem Erregerstrom beaufschlagten Spulenanordnung des Rotors oder des Stators, wobei der Elektromotor frei einer elektrischen Kontaktkopplung zum Übertragen des Erregerstroms zwischen dem Stator und dem Rotor ist und eine Einrichtung zum Erfassen der Position des Rotors umfasst.

## Beschreibung

Die Erfindung betrifft eine Vorrichtung mit Elektromotor zum Bereitstellen von Verpackungsmaterial, wie einen Wellpappenbahnabschnitt oder einen Papierpolstermaterialstrang, insbesondere aus Recyclingpapier. Ferner betrifft die Erfindung ein Verfahren zum Betreiben einer Verpackungsmaterialbereitstellungsvorrichtung. Gattungsgemäße Vorrichtungen werden beispielsweise in Logistikzentren als ortsveränderliche, mobile Einheiten aufgestellt, um beim Verpacken eines Gegenstands längenkonfektioniertes Verpackungsmaterial bereitzustellen. Als Verpackungsmaterial kann beispielsweise ein Papierpolsterstrang bereitgestellt werden, der aus einer im Vergleich zum Papierpolsterstrang raumsparenden ein- oder mehrlagigen Papierbahn, insbesondere aus Recyclingpapier, in Form einer Materialbahnrolle oder eines zick-zack-gefalteten Verpackungsmaterialstapels, der auch als Leporello-Stapel bezeichnet wird, gewonnen wird. Zur Fertigung des Papierpolsterstrangs wird die Papierbahn von einer Rolle oder einem Leporello-Stapel abgezogen und derart umgeformt, dass sich Lufteinschlüsse bilden, die eine Dämpfung zwischen dem zu verpackenden Gegenstand und der Außenverpackung bewirken. Im Anschluss an die Umformung der Papierbahn in einen dreidimensionalen Papierpolsterstrang kann ein Papierpolstererzeugnis, insbesondere einer bestimmten Länge, von dem Papierpolsterstrang abgetrennt werden. Verpackungsmaterial kann aber auch in Form von Wellpappenbahnabschnitten bereitgestellt werden, die von einer Wellpappenbahn, insbesondere in Form eines Leporello-Stapels, gefördert und im Anschluss vorzugsweise in längenkonfektionierte Abschnitte abgetrennt werden. Wellpappenbahnabschnitte werden aus Nachhaltigkeitsgründen bevorzugt ebenfalls aus Recyclingpapier hergestellt.

DE 10 2016 114 342 A1 offenbart eine Verpackungsmaterialbereitstellungsvorrichtung, mit zwei Elektromotoren, die jeweils eine Antriebsrolle der Vorrichtung antreiben und über eine Steuereinheit angesteuert werden. Die Nutzung einer solchen Vorrichtung ermöglicht im Vergleich zu rein manuell betriebenen Vorrichtungen eine größere Produktionskapazität. Jedoch bergen die dafür erforderlichen zusätzlichen Komponenten, wie zum Beispiel der Elektromotor und eine mit dem Elektromotor verbundene Steuereinheit, auch zusätzliche Ausfallrisiken der Vorrichtung. Beispielsweise unterliegen Elektromotoren einem Verschleiß, sodass diese nach einer bestimmten Standzeit ausgetauscht werden müssen.

Ferner kann im Falle einer Verstopfung der Vorrichtung der Elektromotor oder die Steuereinheit überhitzen, was zu einem Ausfall der Vorrichtung führen kann. Insbesondere bei der Fertigung von Verpackungsmaterial aus Recyclingpapier besteht außerdem ein erhöhtes Verstopfungsrisiko, da Recyclingpapier im Vergleich zu frischfaserhaltigen Papiermaterial kürzere Fasern aufweist, die beim Schneiden oder Reißen des Papiers zu einer erhöhten Staub- und Schnipselbildung führen, was wiederum das Auftreten von Verstopfungen fördern kann. Ferner birgt die Erhöhte Staub- und Schnipselbildung in Kombination mit der Verwendung eines Elektromotors eine erhöhte Brandgefahr, insbesondere bei Überhitzen der Elektromotoren.

Darüber hinaus bringt die Verwendung von Elektromotoren einen erhöhten Entwicklungsaufwand für neue, jeweils für bestimmte Materialien und Formen eines Verpackungsmaterials ausgelegte Vorrichtungen mit sich. So muss in der Regel die Steuereinheit je nach Anzahl und Art der verwendeten Elektromotoren ausgelegt werden. Dies führt zu erhöhten Entwicklungszeiten und Entwicklungskosten für die Vorrichtungen.

Es ist Aufgabe der Erfindung, die Nachteile des Standes der Technik zu überwinden, insbesondere eine Vorrichtung zum Bereitstellen von Verpackungsmaterial und ein Verfahren zum Betreiben einer Verpackungsmaterialbereitstellungsvorrichtung bereitzustellen, bei dem die Standzeiten des Elektromotors erhöht, das Ausfallrisiko, beispielsweise durch Überhitzen oder Brand, reduziert und/oder die Entwicklungszeiten oder Kosten für die Entwicklung von Verpackungsmaterialbereitstellungsvorrichtung, insbesondere von deren Steuereinheiten, reduziert ist.

Die Aufgabe wird durch den Gegenstand der unabhängigen Ansprüche gelöst.

Die Erfindung betrifft eine Vorrichtung zum Bereitstellen von Verpackungsmaterial, wie einen Wellpappenbahnabschnitt oder einen Papierpolstermaterialstrang, durch Manipulation, insbesondere Umformen, Fördern und/oder Abtrennen, eines Faserausgangsmaterials, wie einer ein- oder mehrlagigen Papierbahn oder einer Wellpappenbahn. Gemäß einem ersten Aspekt der vorliegend Erfindung umfasst die Vorrichtung wenigstens eine mechanisch anzutreibende Arbeitseinrichtung, wie eine Deformationseinrichtung, insbesondere ein Deformationsradpaar, eine Fördereinrichtung, insbesondere ein Förderradpaar, oder eine Ablängvorrichtung, insbesondere einen Rotationsschneider oder einen Translationsschneider. Ferner umfasst die Vorrichtung wenigstens einen die Arbeitseinrichtung antreibenden Elektromotor mit einem ortsfesten Stator, einem dazu beweglich gelagertem Rotor und einer mit einem Erregerstrom beaufschlagten Spulenanordnung des Rotors oder des Stators. Gemäß dem ersten Aspekt der vorliegenden Erfindung, ist der Elektromotor frei einer elektrischen Kontaktkopplung zum Übertragen des Erregerstroms zwischen dem Stator und dem Rotor. Ferner umfasst der Elektromotor eine Einrichtung zum Erfassen der Position des Rotors.

Das Verpackungsmaterial ist insbesondere aus Recyclingpapier hergestellt. Recyclingpapier sind insbesondere Papiermaterialien mit einem geringen Anteil (weniger als 50%) an frischfaserhaltigem Papiermaterial. Insbesondere Papiermaterialien, die 70% bis 100% Altpapier enthalten, sind bevorzugt. Das Recyclingpapier im Sinne dieser Erfindung soll Papiermaterial sein, das einen Zugfestigkeitsindex längs zur Maschinenlaufrichtung von höchstens 90 Nm/g aufweisen kann, vorzugsweise eine Zugfestigkeit von 15 Nm/g bis 60 Nm/g und einen Zugfestigkeitsindex quer zur Maschinenlaufrichtung von höchstens 60 Nm/g aufweisen kann, vorzugsweise eine Zugfestigkeit von 5 Nm/g bis 40 Nm/g . Zur Bestimmung der Zugfestigkeit bzw. des Zugfestigkeitsindex kann eine Norm DIN EN ISO 1924-2 oder DIN EN ISO 1924-3 herangezogen werden. Zudem oder alternativ kann eine Recyclingpapiereigenschaft oder Altpapiereigenschaft durch den sogenannten Berstwiderstand charakterisiert werden. Ein Material in diesem Sinne ist Recyclingpapier mit einem Berstindex von höchstens 3,0 kPa*m^2/g, vorzugsweise mit einem Berstindex von 0,8 kPa*m^2/g bis 2,5 kPa*m^2/g. Zur Bestimmung des Berstindex wird die Norm DIN EN ISO 2758 herangezogen. Weiterhin weist das Verpackungsmaterial eine flächenbezogene Masse von insbesondere 40 g/m^2 bis max. 140 g/m^2 auf. Das Faserausgangsmaterial kann insbesondere eine ein- oder mehrlagige Papierbahn oder eine Wellpappenbahn sein. Ferner kann das Faserausgangsmaterial als Materialbahnrolle oder als zick-zack-gefalteter Verpackungsmaterialstapel vorliegen, der auch als Leporello-Stapel bezeichnet wird.

Der Unterschied zwischen Faserausgangsmaterial und Verpackungsmaterial kann insbesondere darin bestehen, dass das Faserausgangsmaterial beispielsweise als Materialbahnrolle oder als Verpackungsmaterialstapel vorliegt, wohingegen das Verpackungsmaterial ein von der Materialbahnrolle oder dem Verpackungsmaterialstapel abgeförderter Materialabschnitt ist. In diesem Fall kann die Manipulation des Faserausgangsmaterials bereits in dem Abfördern eines Materialabschnitts von der Materialbahnrolle oder dem Verpackungsmaterialstapel liegen. Unter Manipulation kann aber auch insbesondere das Abtrennen eines Verpackungsmaterialabschnitts von einer Materialbahn verstanden werden. Beispielsweise kann die Manipulation in dem Abtrennen eines Verpackungsmaterialerzeugnisses von einem Verpackungsmaterialstrang liegen. Ferner kann die Manipulation insbesondere darin bestehen, das Faserausgangsmaterial umzuformen. Beispielsweise kann die Manipulation in der Umformung einer ein oder mehrlagigen Papierbahn in einen dreidimensionalen Papierpolsterstrang bestehen. Sowohl das Fördern, das Abtrennen und das Umformen können allein oder in Kombination die Manipulation des Faserausgangsmaterials darstellen. Eine besonders bevorzugte Form der Manipulation besteht darin zunächst eine ein- oder mehrlagigen Papierbahn in einen dreidimensionalen Papierpolsterstrang umzuformen und anschließend ein Papierpolstererzeugnis von dem Papierpolsterstrang abzutrennen. Alternativ liegt eine bevorzugte Form der Manipulation darin einen Wellpappenbahnabschnitt von einer Wellpappenbahn zu Fördern und anschließend vorzugsweise den geförderten Wellpappenbahnabschnitt von der restlichen Wellpappenbahn abzutrennen.

Die im Zusammenhang mit dem ersten und/oder zweiten Aspekt der vorliegenden Erfindung beschriebene Vorrichtung kann insbesondere eine Verpackungsmaterialbereitstellungsvorrichtung sein. Eine Verpackungsmaterialbereitstellungsvorrichtung stellt insbesondere Verpackungsmaterial durch Manipulation von Faserausgangsmaterial bereit. Wie zuvor und nachfolgend beschrieben, kann die Manipulation des Faserausgangsmaterials einzeln oder in Kombination sowohl das Fördern, das Abtrennen und/oder das Umformen des Faserausgangsmaterials umfassen. Bevorzugt umfasst die Manipulation jedoch wenigstens das Abtrennen oder das Umformen von Faserausgangsmaterial. In Einsatzgebieten bzw. Ausführungsformen, bei denen die Manipulation ausschließlich in der Förderung des Faserausgangsmaterials besteht, umfasst die Förderung insbesondere das Abfördern des Faserausgangsmaterials von einer Materialbahnrolle oder von einem Verpackungsmaterialstapel. Besonders bevorzugt betrifft die im Zusammenhang mit dem ersten und/oder zweiten Aspekt der vorliegenden Erfindung beschriebene Vorrichtung eine Verpackungsmaterialerzeugungsvorrichtung. Unter einer Verpackungsmaterialerzeugungsvorrichtung ist insbesondere eine Vorrichtung zu verstehen, bei der die Manipulation wenigstens ein Umformen und/oder ein Abtrennen des Faserausgangsmaterials umfasst. Insbesondere betrifft die im Zusammenhang mit dem ersten und/oder zweiten Aspekt der vorliegenden Erfindung beschriebene Vorrichtung eine Polstermaterialerzeugungsvorrichtung. Unter einer Polstermaterialerzeugungsvorrichtung ist insbesondere ein Vorrichtung zu verstehen, bei der die Manipulation eine Umformung umfasst, bei der aus einer ein- oder mehrlagigen Bahn von Ausgangsmaterial, insbesondere aus einer ein- oder mehrlagigen Papierbahn, ein dreidimensionaler Polsterstrang, insbesondere ein dreidimensionaler Papierpolsterstrang, erzeugt wird.

Für die Manipulation des Faserausgangsmaterials kann insbesondere eine der genannten Arbeitseinrichtung eingesetzt werden. Zusätzlich kann für die Manipulation aber auch eine Umformvorrichtung, wie ein Umformtrichter, eingesetzt werden in die das Faserausgangsmaterial von einer Arbeitseinrichtung, wie einer Fördervorrichtung gefördert wird.

Zum Antreiben der Arbeitseinrichtung, kann die Spulenanordnung mit einem Erregerstrom beaufschlagt werden. Die Spulenanordnung kann prinzipiell am Rotor oder am Stator ausgebildet sein, wobei die Ausbildung am Stator bevorzugt ist. Die Spulenanordnung umfasst vorzugsweise wenigstens drei Spulen, die im Wechsel mit dem Erregerstrom beaufschlagt werden können, um ein Drehfeld zu erzeugen, das den Rotor in Drehung versetzt. Dafür weist der Rotor vorzugsweise einen Permanentmagneten, insbesondere einen Permanentmagneten mit wenigstens einem, zwei, drei, vier oder mehr Polpaaren auf. Dadurch, dass der Elektromotor frei einer Kontaktkopplung zwischen dem Stator und dem Rotor ist, kann der Verschleiß des Elektromotors, beispielsweise im Vergleich zu Bürstenmotoren, reduziert werden und somit die Standzeiten der Vorrichtung erhöht werden. Durch die Einrichtung zum Erfassen der Position des Rotors kann die Position des Rotors ermittelt werden und somit die Spulenanordnung entsprechend der Rotorposition angesteuert werden ohne eine elektrische Kontaktkopplung, wie beispielsweise durch Bürsten, zwischen Stator und Rotor einsetzen zu müssen. Gleichzeitig ermöglicht die Positionserfassungseinrichtung insbesondere die Position des Rotors bis auf die Auflösung des Elektromotors genau anzugeben. Die Auflösung des Elektromotors ergibt sich insbesondere aus dem Produkt der Polpaare und der Spulen. Bei einem Elektromotor mit vier Polpaare und drei Spulen ergibt sich somit eine Auflösung von 24, sodass die Rotorposition bis auf 15° genau erfasst werden kann.

In einer bevorzugten Ausführungsform ist der wenigstens ein Elektromotor ein bürstenloser Gleichstrommotor oder ein Schrittmotor. Alternativ oder zusätzlich ist der wenigstens eine Elektromotor ein permanenterregter Motor und/oder ein Synchronmotor. Im Allgemeinen kann der erfindungsgemäße Motor ein einphasiger Motor, wie ein Lavet-Schrittmotor, ein Wechselstrom-Kurzschlussläufer oder ein Spaltmotor, ein zweiphasiger Motor, wie ein zweiphasiger Schrittmotor, oder ein dreiphasiger Motor wie ein bürstenloser Gleichstrommotor oder ein Drehstromasynchronmotor sein. Besonders vorteilhaft ist jedoch die Ausführung eines bürstenlosen Gleichstrommotors mit einem Permanentmagneten als Rotor, insbesondere mit zwei, drei, oder vier Polpaaren und einem Stator mit einer Spulenanordnung, vorzugsweise von drei Spulen. Im Falle der Verwendung von Schrittmotoren, kann es jedoch auch bevorzugt sein, einen Rotor mit wenigstens 10, 30 oder 50 Polpaaren und einen Stator mit zwei, drei oder vier Spulen zu verwenden.

In einer bevorzugten Ausführungsform weist die Positionserfassungseinrichtung wenigstens einen, vorzugsweise drei, insbesondere elektromagnetische Sensoren, wie einen Hallsensor, einen Resolver oder einen Strichgeber, zum Messen eines durch die Drehbewegung des Rotors induzierten Signals auf. Vorzugsweise wird das Signal durch Drehung des Rotors um einen vorbestimmten Winkel, besonders bevorzugt um 10° bis 60°, 20° bis 50° oder 30° bis 40° erzeugt. Bei der weniger vorteilhaften Ausführungsform mit einem Schrittmotor kann der vorbestimmte Winkel deutlich kleiner, beispielsweise zwischen 1° und 10° oder weniger als 5° oder weniger als 3° sein.

Der vorbestimmte Winkel orientiert sich dabei insbesondere an der Sensorauflösung. Bei der bevorzugten Ausführungsform mit drei jeweils um 120° zueinander versetzten Sensoren und einem Rotor mit vier Polpaaren bzw. acht Polen ergibt sich eine Sensorauflösung von 24. Dadurch ergibt sich ein vorbestimmter Winkel von wenigstens 15°. Durch die Drehbewegung des Rotors um 15° oder mehr wird gewährleistet, dass wenigstens ein Sensor im Laufe der Drehbewegung einen Wechsel von einem Pluspol auf einen Minuspol erfährt, wodurch eine Signal, insbesondere eine Spannung, in dem Sensor gemessen bzw. erzeugt wird. Bei der bevorzugten Ausführungsform des bürstenlosen Gleichstrommotors mit drei Spulen und vier Polpaaren genügt insbesondere bereits eine Drehbewegung um 15°. Um einen Sicherheitsfaktor zu gewährleisten kann aber auch bei dieser Variante beispielsweise ein vorbestimmter Winkel von 30° vorgesehen werden. Der wenigstens eine Sensor kann Teil des Motors, insbesondere Teil eines bürstenlosen Gleichstrommotors sein. Alternativ kann der wenigstens eine Sensor separat zum Motor ausgebildet sein und vorzugsweise außerhalb des Motors angeordnet sein.

In einer bevorzugten Ausführungsform weist die Vorrichtung eine Auswertevorrichtung, insbesondere eine Steuereinheit, wie eine elektromotoreigene Steuereinheit, auf, die aus wenigstens einem von der Positionserfassungseinrichtung gemessenen Signal die Position des Rotors berechnet. Als Auswertevorrichtung wird vorzugsweise eine Regelelektronik, insbesondere eine elektromotoreigene Regelelektronik, wie eine Regelelektronik für bürstenlose Gleichstrommotoren, verwendet. Vorzugsweise ist die Regelelektronik mit den Sensoren der Positionserfassungseinrichtung verbunden und berechnet aus dem durch die Drehbewegung des Rotors gemessenen Signal die Position des Rotors. Ferner wird die Regelelektronik insbesondere dafür genutzt die Spulenanordnung des Elektromotors in Abhängigkeit der Position des Rotors anzusteuern. Die Auswertevorrichtung ist vorzugsweise separat zum Motor ausgebildet, insbesondere auf einer Steuereinheit, wie einer elektromotoreigne Steuereinheit, ausgebildet. Vorzugsweise speichert, insbesondere zählt, die Positionserfassungseinrichtung das gemessene Signal, einen Referenzwert oder die Position des Rotors und berechnet daraus den von dem Rotor über einen bestimmten Zeitraum zurückgelegten Winkel, insbesondere die zurückgelegten Umdrehungen. Dies kann insbesondere über einen Zähler realisiert werden, der von den Sensoren generierte Signale zählt und, insbesondere unter Berücksichtigung der Sensorauflösung und der Auflösung des Elektromotors, aus der Anzahl der Signale den von dem Rotor zurückgelegten Winkel bzw. die getätigten Umdrehungen berechnet. Dies bietet insbesondere die Möglichkeit, die Betriebszeiten der Vorrichtung zu erfassen und so beispielsweise den Verschließ bestimmter Teile besser überwachen zu können oder den Materialverbrauch, beispielsweise der Papierbahn abzuschätzen

Alternativ oder zusätzlich weist die Positionserfassungseinrichtung eine Auswertevorrichtung, insbesondere eine Steuereinheit, wie eine elektromotoreigene Steuereinheit zum Messen eines durch eine Drehbewegung des Rotors in der Spulenanordnung induzierten Signals, wie eines Stroms und/oder einer Spannung auf. Dabei wird ausgenutzt, dass die Drehbewegung des Rotors einen generatorischen Effekt auf die Spulen auswirkt, der eine messbare Gegenspannung in den Spulen der Spulenanordnung bewirkt. Dieser Effekt ist insbesondere als Back EMF bekannt. Auch für dieser Ausführung weist die Auswertevorrichtung vorzugsweise eine Regelelektronik, wie eine Steuerung eines bürstenlosen Gleichstrommotors, auf, die einerseits die Spulenanordnung mit einer Versorgungsspannung beaufschlagt und andererseits die durch die Drehbewegung des Rotors in den Spulen generierte Gegenspannung misst und auf Grundlage der gemessenen Gegenspannung, insbesondere unter Berücksichtigung der Auflösung des Elektromotors, die Position des Rotors berechnet. Vorteilhaft an diese Ausführungsform ist, dass die Positionserfassungseinrichtung einzig mit einer Regelelektronik auskommen kann und somit Kosten für Sensoren eingespart werden kann. Jedoch ergibt sich auch eine höhere Anforderung an die Programmierung der Regelelektronik. Bei dieser Ausführungsform sind Positionserfassungseinrichtung und Auswertevorrichtung vorzugsweise auf einer gemeinsamen Steuereinheit ausgebildet, auf der sie gegebenenfalls auf unterschiedlichen Platinen angeordnet sind. Vorzugsweise berechnet die Auswertevorrichtung aus dem gemessenen Signal die Position des Rotors, speichert diese vorzugsweise und berechnet daraus vorzugsweise den von dem Rotor über einen bestimmten Zeitraum zurückgelegten Winkel, insbesondere die zurückgelegten Umdrehungen.

In einer Weitergestaltung fragt die Auswertevorrichtung im Falle des Messens eines durch die Drehbewegung des Rotors induzierten Signals vorzugsweise ab, ob die Spulenanordnung mit einem Erregerstrom beaufschlagt wird. Sofern die Spulenanordnung nicht mit einem Erregerstrom beaufschlagt wird, initiiert die Auswertevorrichtung vorzugsweise die Bereitstellung von Verpackungsmaterial durch Manipulation des Faserausgangsmaterials. Diese Ausgestaltung dient insbesondere der Initiierung der Bereitstellung von Verpackungsmaterial durch Betätigen von bereits manipuliertem Verpackungsmaterial, das vorzugsweise aus der Vorrichtung hervorsteht. Ein hierfür bevorzugt eingesetztes Verfahren ist im Zusammenhang mit dem fünften Aspekt der vorliegenden Erfindung weiter unten beschrieben. Besonders vorteilhaft an dieser Ausgestaltung ist, dass dadurch eine die Verpackungsmaterialbereitstellungsvorrichtung bedienende Bedienperson in einem Schritt das bereits manipulierte Verpackungsmaterial aus der Vorrichtung herausnehmen kann und die Bereitstellung des nächsten Verpackungsmaterials initiieren kann. Die Bedienperson kann sich dadurch ausschließlich dem Verpacken eines Gegenstandes widmen und bekommt automatisch immer wieder neues Verpackungsmaterial bereitgestellt. Durch das abfragen, ob die Spulenanordnung mit einem Erregerstrom beaufschlagt ist, wird sichergestellt, dass beispielsweise ein versehentliches Betätigen des Verpackungsmaterials eine bereits laufende Bereitstellung von Verpackungsmaterial nicht ungewollt unterbricht oder hinsichtlich der Verfahrensparameter abändert.

In einer bevorzugten Ausführungsform weist die Vorrichtung eine übergeordnete Steuereinheit zum Ansteuern einer Steueruntereinheit, wie eine elektromotoreigene Steueruntereinheit auf, wobei die Steueruntereinheit die Bereitstellung durch Manipulation dadurch initiiert, dass ein Auslösesignal an die übergeordnete Steuereinheit übertragen wird, woraufhin die übergeordnete Steuereinheit vorzugsweise wenigstens eine, besonders bevorzugt zwei oder drei, Steuereinheiten für die Bereitstellung durch Manipulation ansteuert. Wie zuvor beschrieben, kann die Manipulation des Faserausgangsmaterials mehrere aneinandergereihte Manipulationsschritte, wie beispielsweise Fördern, Umwandeln und Abtrennen umfassen. Bei der besonders bevorzugten Ausführungsform, bei der ein Papierpolsterstrang von einer Zufördervorrichtung einer Ablängvorrichtung zugeführt, ein Papierpolstererzeugnis von dem Papierpolsterstrang von der Ablängvorrichtung abgetrennt und das Papierpolstererzeugnis von einer Abfördervorrichtung abgefördert wird, werden gleich drei Arbeitseinrichtung angesteuert. Es hat sich daher als besonders vorteilhaft herausgestellt eine übergeordnete Steuereinheit zu verwenden, welche die jeweiligen Arbeitseinrichtungen über untergeordnete Steuereinheiten ansteuert. Vorzugsweise Steuern und/oder Regeln die untergeordneten Steuereinheiten jeweils eigene Elektromotoren, die jeweils einer Arbeitseinrichtung zugeordnet sind. Vorteile und weiteren Ausgestaltung der Kombination einer übergeordneten Steuereinheit mit wenigstens einer Steueruntereinheit werden insbesondere im Zusammenhang mit dem zweiten Aspekt der vorliegenden Erfindung erläutert.

In einer bevorzugten Ausführungsform ist die wenigstens eine angetriebene Arbeitseinrichtung eine Fördereinrichtung mit wenigstens einem Förderrad, das derart mit dem Rotor des Elektromotors gekoppelt ist, dass eine Drehbewegung des Förderrades eine Drehbewegung des Rotors bewirkt. Die Kopplung umfasst vorzugsweise ein Getriebe, insbesondere ein Schneckengetriebe, das vorzugsweise die Drehzahl des Rotors auf eine Drehzahl des Förderrades untersetzt, insbesondere mit einem Untersetzungsverhältnis von 3:2 bis 10:1, vorzugsweise von 5:1. Besonders vorteilhaft an der Verwendung eines Förderrades ist, dass dieses, sofern es im Eingriff mit dem manipulierten Verpackungsmaterial ist, über einfaches Ziehen oder Schieben des Verpackungsmaterials, insbesondere in Förderrichtung des Förderrades, mit einer Drehbewegung beaufschlagt werden kann. Diese Drehbewegung kann insbesondere, beispielsweise bei einer direkten Kopplung des Rotors des Elektromotors mit einer Antriebswelle des Antriebsrades, direkt in einer Drehbewegung des Rotors umgesetzt werden. Besonders bevorzugt wird jedoch ein Getriebe zwischen Förderrad und Rotor geschaltet. Durch die Untersetzung der Drehzahl des Rotors auf die Drehzahl des Förderrades wird eine Drehbewegung des Förderrades auf eine größere Drehbewegung des Rotors übersetzt. Dadurch kann gewährleistet werden, dass selbst bei kleinen Drehbewegungen von wenigen Grad, beispielsweise von 3°, des Förderrades, insbesondere durch Betätigen des manipulierten Verpackungsmaterials, eine ausreichende Drehbewegung des Rotors, bei einer Untersetzung von 5 zu 1 von beispielsweise 15°, erzeugt wird, um diese mittels der Positionserfassungseinrichtung zu erfassen. In diesem Zusammenhang hat es sich als besonders vorteilhaft erwiesen eine Spulenanordnung mit drei Spulen mit einem Rotor mit vier Polpaaren und die Positionserfassungsvorrichtung mit drei Sensoren, insbesondere Hallsensoren, zu versehen. Besonders bevorzugt wird dies mit einer Untersetzung der Drehbewegung des Rotors auf das Förderrad von 5 zu 1 kombiniert.

Bevorzugt ist die wenigstens eine angetriebene Arbeitseinrichtung ein Förderradpaar, wobei wenigstens ein Förderrad von dem Elektromotor angetrieben ist und/oder die Förderräder gegeneinander verspannt sind. Vorzugsweise sind die Förderräder mit einer Kraft von wenigstens 10 Newton, 50 Newton, 100 Newton, 150 Newton, 250 Newton, 350 Newton, 450 Newton, 550 Newton, 700 Newton oder 900 Newton gegeneinander verspannt. Alternativ oder zusätzlich ist der Radachsabstand der Räder jeweils eines Radpaares, vorzugsweise derart unterdimensioniert, dass die Räder gegeneinander elastisch vorgespannt sind. Durch eine ausreichend hohe Kraft wird insbesondere gewährleistet, dass die Betätigung des Verpackungsmaterials, insbesondere ein Ziehen an dem Verpackungsmaterial, derart an das Förderrad übertragen wird, dass das Förderrad mit einer Drehbewegung, insbesondere mit einer ausreichend großen Drehbewegung zum Erfassen der Drehbewegung des Rotors, beaufschlagt wird.

In einer bevorzugten Ausführungsform weist die Vorrichtung wenigstens zwei der mechanisch anzutreibenden Arbeitseinrichtungen auf, wobei vorzugsweise eine Arbeitseinrichtung eine Fördervorrichtung, wie ein Förderradpaar, ist und eine Arbeitseinrichtung eine Ablängvorrichtung ist. Alternativ können beide Arbeitseinrichtungen Fördervorrichtungen, wie ein Zuförderradpaar und ein Abförderradpaar, sein und vorzugsweise eine dritte der mechanisch anzutreibenden Arbeitseinrichtungen vorgesehen sein, die eine Ablängvorrichtung ist und besonders bevorzugt in Förderrichtung zwischen den zwei Fördervorrichtungen angeordnet ist. Bevorzugt werden die zwei, vorzugsweise drei, Arbeitseinrichtungen jeweils von einem eigenen Elektromotor angetrieben. Diese Ausführungsform ermöglicht insbesondere ein hinsichtlich der verwendeten Elektromotoren verschleißarmes Bereitstellen von Verpackungsmaterial, insbesondere in Form von Papierpolstererzeugnissen.

Ein zweiter Aspekt der vorliegenden Erfindung betrifft ebenfalls eine Vorrichtung zum Bereitstellen von Verpackungsmaterial, wie einen Wellpappenbahnabschnitt oder einen Papierpolstermaterialstrang, durch Manipulation, insbesondere Umformen, Fördern und/oder Abtrennen, eines Faserausgangsmaterials, wie einer ein- oder mehrlagigen Papierbahn oder einer Wellpappenbahn. Die Vorrichtung umfasst eine mechanisch anzutreibende Arbeitseinrichtung, wie eine Deformationseinrichtung, insbesondere ein Deformationsradpaar, eine Fördereinrichtung, insbesondere ein Förderradpaar, oder eine Ablängvorrichtung, insbesondere ein Rotationsschneider oder ein Translationsschneider und wenigstens einen die Arbeitseinrichtung antreibenden Elektromotor. Gemäß dem zweiten Aspekt der vorliegenden Erfindung weist die Vorrichtung ferner wenigstens eine elektromotoreigene Steueruntereinheit zum Steuern- und/oder Regeln des Elektromotors, eine übergeordnete Steuereinheit zum Ansteuern der wenigstens einen Steueruntereinheit und eine Kommunikationsverbindung zum Datenaustausch zwischen der wenigstens einen elektromotoreigenen Steueruntereinheit und der übergeordneten Steuereinheit mit der BUS-Technologie, wie der CAN-BUS-Technologie, auf.

Die zuvor und nachfolgend im Zusammenhang mit dem ersten Aspekt der vorliegenden Erfindung genannten Ausgestaltungen können insbesondere mit den zuvor und nachfolgend ausgeführten Ausgestaltungen des zweiten Aspekts der vorliegenden Erfindung kombiniert werden und umgekehrt.

Unter elektromotoreigene Steuereinheit ist insbesondere eine Steuereinheit zu verstehen, die den Elektromotor selbstständig antreiben kann. Dazu kann die elektromotoreigene Steuereinheit eine eigene Stromversorgung aufweisen. Vorzugsweise ist die elektromotoreigene Steueruntereinheit derart ausgebildet, dass sie einen Elektromotor gemäß dem ersten Aspekt der vorliegenden Erfindung antreiben kann. Besonders vorteilhaft ist es, wenn die elektromotoreigene Steueruntereinheit eine Regelelektronik aufweist, die insbesondere in der Lage ist einen bürstenlosen Gleichstrommotor anzusteuern und/oder zu regeln. Ferner umfasst die elektromotoreigene Steueruntereinheit vorzugsweise einen Frequenzumrichter um die Drehzahl, das Drehmoment, die Drehrichtung, die Ströme, Spannungen und/oder die Position des Rotors des Elektromotors, insbesondere eines bürstenlosen Gleichstrommotors, steuern und/oder regeln zu können. Überraschenderweise hat sich herausgestellt, dass die Verwendung derartiger Steueruntereinheiten den Entwicklungsaufwand für neue Vorrichtungen, die auf unterschiedliche Arten von bereitzustellendem Verpackungsmaterial angepasst werden, deutlich reduziert. Dies liegt unter anderem daran, dass die Verwendung von elektromotoreigenen Steueruntereinheiten die Anforderungen an die übergeordnete Steuereinheit reduzieren. So kann insbesondere eine einheitliche übergeordnete Steuereinheit verwendet werden, die lediglich Steuerbefehle an die untergeordneten Steuereinheiten sendet, die eigentliche Steuerung und/oder Regelung der Elektromotoren jedoch durch die Steueruntereinheiten erfolgt. Insbesondere kann unabhängig davon, ob beispielsweise ein Bürstenmotor oder ein bürstenlose Gleichstrommotor verwendet wird, durch die zwischengeschaltete elektromotoreigene Steueruntereinheit die gleiche übergeordnete Steuereinheit für unterschiedliche Vorrichtungen mit abweichender Art und Anzahl an Arbeitseinrichtungen verwendet werden. Durch die Vereinheitlichung und gleichzeitige Reduzierung der Anforderung an die übergeordnete Steuereinheit, können insbesondere die Kosten für diese deutlich reduziert werden. Auch der Entwicklungsaufwand für neue Vorrichtungen anlagen kann reduziert werden, da beispielsweise beim Austausch eines eine Arbeitseinrichtung antreibenden Elektromotors, lediglich die Steueruntereinheit desselben angepasst werden muss, die übergeordnete Steuereinheit und die möglicherweise weiteren Steueruntereinheiten möglicher weiterer Arbeitseinrichtungen jedoch nicht neu ausgelegt werden müssen. Ein weiterer Vorteil ergibt sich beispielsweise im Brandschutz, da elektromotoreigenen Steueruntereinheiten vorzugsweise auch zur Überwachung von Erregerströmen genutzt werden können und bei drohender Überhitzung, beispielsweise durch Verpackungsmaterialverstopfungen in der Vorrichtung, die Anlage automatisch abgeschaltet werden kann.

An dieser Stelle sei darauf hingewiesen, dass die Steueruntereinheiten nicht zwangsläufig einem Elektromotor zugeordnet sein müssen. Die oben ausgeführten Vorteile ergeben sich ebenfalls bei anderen Komponenten, wie beispielsweise bei Funkmodulen, wie WLAN-Modulen und Bluetooth-Modulen, bei Anzeigen, wie Displays und Touchscreen, bei Speichermodulen, zum Abspeichern und Abrufen von Verfahrensparametern, wie Fördergeschwindigkeit, Spannung des Materials und/oder Verpackungsmateriallänge, insbesondere für vorbestimmte Verpackungsmaterialien. Insbesondere kann die wenigstens eine elektromotoreigene Steueruntereinheit von wenigstens einer Steueruntereinheit ergänzt oder ersetzt werden, die derartigen Komponenten zugeordnet ist.

Vorzugsweise nutzt die Kommunikationsverbindung eine Bus-Technologie, wie sie auch speicherprogrammierbare Steuerungen aufweisen. Besonders bevorzugt wird einer Bus-Technologie verwendet über die Steuereinheiten mit unterschiedlichen Versorgungsspannungen, insbesondere mit 3,3 Volt- und/oder einer 5 Volt-Versorgungsspannungen, miteinander kommunizieren können. Ferner wird vorzugsweise die übergeordnete Steuereinheit und/oder die wenigstens eine Steueruntereinheit über eine 3,3 Volt Spannung versorgt. Dadurch kann insbesondere die Kompatibilität der Steuereinheiten, insbesondere der übergeordneten Steuereinheit, weiter erhöht werden.

In einer Ausführungsform misst die Steueruntereinheit einen den Elektromotor ansteuernden Erregerstrom und unterbricht bei Überschreiten eines vorgegebenen, zulässigen Stromes den Erregerstrom, um insbesondere bei Verpackungsmaterialverstopfungen in der Vorrichtung ein Überhitzen des Elektromotors, der Steueruntereinheit und/oder der übergeordneten Steuereinheit zu vermeiden. Vorzugsweise kann der Steueruntereinheit von der übergeordneten Steuereinheit ein zulässiger Erregerstrom mitgeteilt werden. Alternativ oder zusätzlich kann die Steueruntereinheit vorzugsweise einen zulässigen Erregerstrom von der übergeordneten Steuereinheit abfragen. Ferner ist bevorzugt, dass die Steueruntereinheit beim Auftreten eines den zulässigen Strom überschreitenden Erregerstrom, ein entsprechendes Signal an die übergeordnete Steuereinheit übermittelt.

In einer bevorzugten Ausführungsform weist die Steueruntereinheit einen Frequenzumrichter, vorzugsweise einen ein-Phasen Frequenzumrichter mit einem Netzteil und einer Steuerung auf. Vorzugsweise weist jede der verwendeten Steueruntereinheiten einen Frequenzumrichter auf.

In einer bevorzugten Ausführungsform weist die Vorrichtung eine insbesondere ferritische Abschirmung auf, welche die wenigstens eine Steueruntereinheit von der Umgebung gegenüber elektromagnetischen Störsendungen abschirmt. Alternativ oder zusätzlich weist die Vorrichtung eine insbesondere ferritische Abschirmung auf, welche die wenigstens eine Steueruntereinheit und die übergeordnete Steuereinheit und vorzugsweise zusätzlich den wenigstens einen Elektromotor gegenüber elektromagnetischen Störsendungen abschirmt. Alternativ oder zusätzlich weist die Vorrichtung eine insbesondere ferritische Abschirmung der wenigstens einen Steueruntereinheit, des wenigstens einen Elektromotors, der übergeordneten Steuereinheit und der wenigstens einen Arbeitseinrichtung auf, welche die wenigstens eine Steueruntereinheit, den wenigstens einen Elektromotor, die übergeordnete Steuereinheit und die wenigstens eine Arbeitseinrichtung gegenüber elektromagnetischen Störsendungen abschirmt.

Bevorzugt kann eine ferritische Abschirmung durch das Gehäuse der Vorrichtung ausgebildet sein. Vorzugsweise weist jede Steueruntereinheit einer ferritische Abschirmung auf. Dies ist insbesondere deshalb von Bedeutung, weil die Steueruntereinheiten elektromagnetische Strahlung emittieren und sich dadurch gegenseitig beeinträchtigen kann. Vorzugsweise ist die ferritische Abschirmung wenigstens einer, vorzugsweiser jeder, Steueruntereinheit in Form einer ferritische Ummantelung, beispielsweise einer Blechummantelung, ausgebildet. Insbesondere bei Verwendung von Frequenzumrichter ist eine adäquate Abschirmung vorteilhaft, um eine gegenseitige Beeinflussung der Steuereinheiten, insbesondere eine Beschädigung von sensiblen Elementen der Steuereinheiten, möglichst zu vermeiden. Der Grad der Abschirmung kann insbesondere dadurch erhöht werden, dass, vorzugsweise jede der Steueruntereinheiten eine eigene ferritische Abschirmung aufweist und zusätzlich von einer weiteren Abschirmung abgeschirmt wird, welche die untergeordnete und übergeordnete Steuereinheit abschirmt. Ein die Vorrichtung umgebendes ferritische Gehäuse kann vorzugsweise eine weitere Abschirmung bewirken.

Die Arbeitseinrichtung kann insbesondere eine Ablängvorrichtung zum Abtrennen des manipulierten Verpackungsmaterials, insbesondere eines Papierpolstererzeugnisses von einem in der Vorrichtung aus eine ein- oder mehrlagigen Papierbahn umgeformten, dreidimensionalen Papierpolsterstrangs oder eines Wellpappenbahnabschnitts von einer Wellpappenbahn, sein.

Die Vorrichtung umfasst vorzugsweise ferner eine der Arbeitseinrichtung in Förderrichtung flussaufwärts angeordnete Zufördervorrichtung, wie ein Zuförderradpaar, zum Fördern des Verpackungsmaterials. Ferner umfasst die Vorrichtung vorzugsweise einen zweiten die flussaufwärts angeordnete Zufördervorrichtung antreibenden Elektromotor. Zusätzlich umfasst die Vorrichtung vorzugsweise eine zweite elektromotoreigene Steueruntereinheit zum Steuern- und/oder Regeln des zweiten Elektromotors, wobei die zweite Steueruntereinheit und die übergeordneten Steuereinheit über die Kommunikationsverbindung miteinander verbunden sind.

In einer bevorzugten Ausführungsform umfasst die Vorrichtung eine der Arbeitseinrichtung in Förderrichtung flussabwärts angeordnete Abfördervorrichtung, wie ein Abförderradpaar, zum Abfördern des Verpackungsmaterials. Ferner umfasst die Vorrichtung vorzugsweise einen dritten die flussabwärts angeordnete Abfördervorrichtung antreibenden Elektromotor. Zusätzlich umfasst die Vorrichtung vorzugsweise eine dritte elektromotoreigene Steueruntereinheit zum Steuern- und/oder Regeln des dritten Elektromotors, wobei die dritte Steueruntereinheit und die übergeordneten Steuereinheit über die Kommunikationsverbindung miteinander verbunden sind.

Ferner ist es bevorzugt, dass der Zufördervorrichtung und der Abfördervorrichtung jeweils ein eigener Elektromotor zum voneinander unabhängigen Antreiben und/oder Abbremsen der Fördervorrichtungen zugeordnet ist. Dabei werden die Elektromotoren vorzugsweise derart angetrieben, dass die Zufördervorrichtung und die Abfördervorrichtung das manipulierte Verpackungsmaterial, insbesondere vor einem Abtrennen eines Papierpolstererzeugnisses von einem in der Vorrichtung aus eine ein-oder mehrlagigen Papierbahn umgeformten, dreidimensionalen Papierpolsterstrang, spannen. Alternativ oder zusätzlich wird das Abförderradpaar beim Auftreten einer Verpackungsmaterialverstopfung entgegengesetzt zur Förderrichtung angetrieben.

Ferner betrifft die vorliegende Erfindung ein Verfahren zum Bereitstellen von Verpackungsmaterial, das mit einer Vorrichtung gemäß dem ersten oder zweiten Aspekt der vorliegenden Erfindung durchgeführt wird.

Ein dritter Aspekt der vorliegenden Erfindung betrifft ein Verfahren zum Betreiben einer Verpackungsmaterialbereitstellungsvorrichtung, bei dem durch Manipulation, insbesondere Umformen und/oder Fördern, eines Faserausgangsmaterials, wie einer ein- oder mehrlagigen Papierbahn oder einer Wellpappenbahn, Verpackungsmaterial, wie ein Papierpolstermaterialstrang oder ein Wellpappenbahnabschnitt, bereitgestellt wird, wobei die Verpackungsmaterialbereitstellungsvorrichtung wenigstens eine mechanisch anzutreibende Arbeitseinrichtung und wenigstens einen die Arbeitseinrichtung antreibenden Elektromotor mit einem ortsfesten Stator und einen dazu beweglich gelagerten Rotor aufweist. Das Verfahren umfasst die Schritte:
1. Erfassen der Position des Rotors; und
2. Ansteuern wenigstens einer Spule einer Spulenanordnung auf Grundlage der erfassten Position des Rotors mit einem Erregerstrom zum Versetzen des Rotors in eine neue Position.

Vorzugsweise umfasst das Erfassen der Position des Rotors folgende Schritte:
1a) Messen eines durch die Drehbewegung des Rotors induzierten Signals,
1b) Berechnen der Rotorposition auf Grundlage des Signals und vorzugsweise
1c) Speichern, insbesondere Zählen, des Signals, eines Referenzwertes oder der Position des Rotors und vorzugsweise
1d) Berechnen des von dem Rotor über einen bestimmten Zeitraum zurückgelegten Winkels, insbesondere die zurückgelegten Umdrehungen.

Ein vierter Aspekt der vorliegenden Erfindung betrifft ein Verfahren zum Betreiben einer Verpackungsmaterialbereitstellungsvorrichtung, bei dem durch Manipulation, insbesondere Umformen und/oder Fördern, eines Faserausgangsmaterials, wie einer ein- oder mehrlagigen Papierbahn oder einer Wellpappenbahn, Verpackungsmaterial, wie ein Papierpolstermaterialstrang oder ein Wellpappenbahnabschnitt, bereitgestellt wird, wobei die Verpackungsmaterialbereitstellungsvorrichtung wenigstens eine mechanisch anzutreibende Arbeitseinrichtung und wenigstens einen die Arbeitseinrichtung antreibenden Elektromotor aufweist, wobei wenigstens eine elektromotoreigene Steueruntereinheit den Elektromotor steuert und/oder regelt und eine übergeordnete Steuereinheit über eine Kommunikationsverbindung Daten mittels der Bus-Technologie, wie der CAN-BUS-Technologie, mit der elektromotoreigenen Steueruntereinheit austauscht. Vorzugsweise steuert die elektromotoreigene Steueruntereinheit den Elektromotor mit dem Verfahren gemäß dem dritten Aspekt der vorliegenden Erfindung.

Ein fünfter Aspekt der vorliegenden Erfindung betrifft ein Verfahren zum Betreiben einer Verpackungsmaterialbereitstellungsvorrichtung, bei dem durch Manipulation, insbesondere Umformen und/oder Fördern, eines Faserausgangsmaterials, wie einer ein- oder mehrlagigen Papierbahn oder einer Wellpappenbahn, Verpackungsmaterial, wie ein Papierpolstermaterialstrang oder ein Wellpappenbahnabschnitt, bereitgestellt wird. Gemäß dem fünften Aspekt der vorliegenden Erfindung wird das Manipulieren durch Betätigen des manipulierten Verpackungsmaterials im Ausgabebereich der Verpackungsmaterialbereitstellungsvorrichtung initiiert. Insbesondere kann der fünfte Aspekt der vorliegenden Erfindung ein Verfahren zum Betreiben einer Vorrichtung gemäß dem ersten und/oder dem zweiten Aspekt der vorliegenden Erfindung betreffen. Alternativ oder zusätzlich kann der der fünfte Aspekt der vorliegenden Erfindung eine Verfahren zum Betreiben einer Verpackungsmaterialbereitstellungsvorrichtung betreffen, bei dem das Betreiben der Verpackungsmaterialbereitstellungsvorrichtung gemäß dem dritten und/oder vierten Aspekt der vorliegenden Erfindung erfolgt, während die Initiierung der Manipulation gemäß dem fünften Aspekt der vorliegenden Erfindung erfolgt.

Vorzugsweise wir das Betätigen des manipulierten Verpackungsmaterials durch eine Bedienperson ausgeführt, welche die Vorrichtung bedient. Unter Ausgabebereich ist insbesondere der Bereich der Verpackungsmaterialbereitstellungsvorrichtung zu verstehen, in dem das Verpackungsmaterial von einer Bedienperson betätigt, insbesondere gegriffen, werden kann. Der Ausgabebereich kann sich beispielsweise vollständig innerhalb der Verpackungsmaterialbereitstellungsvorrichtung erstrecken, indem dieser so groß ausgestaltet ist, dass das Betätigen des manipulierten Verpackungsmaterials durch eine Bedienperson innerhalb der Vorrichtung gewährleistet wird. Alternativ kann der Ausgabebereich sich sowohl innerhalb, als auch außerhalb der Vorrichtung erstrecken. Dabei ist der Ausgabebereich außerhalb der Vorrichtung vorzugsweise derart ausgestaltet, insbesondere frei zugänglich, dass eine Bedienperson das manipulierte Verpackungsmaterial betätigen, insbesondere greifen, kann. Vorzugsweise ist bei dieser Ausführungsform der Ausgabebereich innerhalb der Vorrichtung derart ausgestaltet, dass ein Eingreifen durch eine Bedienperson in die Vorrichtung erschwert, insbesondere vermieden, wird. Durch eine solche Ausgestaltung kann insbesondere die Verletzungsgefahr der Bedienperson vermieden werden.

Unter dem manipulierten Verpackungsmaterial ist insbesondere Verpackungsmaterial zu verstehen, das bereits durch Manipulation des Faserausgangsmaterials als Verpackungsmaterial bereitgestellt ist. Vorzugsweise ist das manipulierte Verpackungsmaterial selbst durch das erfindungsgemäße Verfahren zum Betreiben einer Verpackungsmaterialbereitstellungsvorrichtung bereitgestellt worden. Dies ist jedoch nicht zwingend notwendig. Das manipulierte Verpackungsmaterial kann beispielsweise auch durch ein bekanntes Verfahren bereitgestellt werden, bei dem beispielsweise die Manipulation durch betätigen eines Schalters an der Verpackungsmaterialbereitstellungsvorrichtung initiiert wird. Wesentlich ist jedoch insbesondere, dass das Betätigen des bereits manipulierten Verpackungsmaterials die Manipulation von Faserausgangsmaterial initiiert, durch welche zusätzliches Verpackungsmaterial bereitgestellt wird.

Vorzugsweise wird die Bereitstellung des Verpackungsmaterials nur dann initiiert, wenn sich die Vorrichtung im Stillstand befindet. Im Stillstand befindet sich die Vorrichtung insbesondere dann, wenn sie kein Faserausgangsmaterial manipuliert. Ein Stand-By Modus, in dem die Vorrichtung auf die Initiierung der Bereitstellung von Verpackungsmaterial wartet kann vorzugsweise auch als Stillstand bezeichnet werden. Vorzugsweise ist der Ausgabebereich der Vorrichtung derart ausgestaltet, dass ein Eingreifen in die Vorrichtung vermieden wird, während der Ausgabebereich außerhalb der Vorrichtung ein Betätigen, insbesondere Greifen, durch eine Bedienperson ermöglicht. Durch vermeiden des Eingreifen in die Vorrichtung, kann insbesondere Verletzungsrisiko von Bedienperson reduziert werden.

In einer bevorzugten Ausführungsform erfolgt das Betätigen durch Bewegen des manipulierten Verpackungsmaterials und die Initiierung vorzugsweise durch Detektieren der Bewegung, insbesondere mit einem dem Ausgabebereich zugeordneten Sensor, wie einem Lichtsensor. Vorzugsweise ist der Sensor dafür derart auf den Ausgabebereich der Vorrichtung gerichtet, dass eine Bewegung des Verpackungsmaterials von dem Sensor detektiert wird. In einer Ausführungsform kann beispielsweise ein Sensor genutzt werden, der detektiert, ob sich Verpackungsmaterial in dem Ausgabebereich oder einen Teil davon befindet oder nicht. Befindet sich kein Material im Ausgabebereich, kann der Sensor ein entsprechendes Signal an eine Steuereinheit weitergeben, die daraufhin das Bereitstellen von Verpackungsmaterial initiiert. Alternativ kann ein Sensor genutzt werden, der eine relative Bewegung des Verpackungsmaterials in dem Ausgabebereich detektiert und an eine Steuereinheit weiterleitet. Bei dieser Ausführungsform kann der Steuereinheit ein vorbestimmter Weg vorgegeben werden, bei dessen Überschreitung die Bereitstellung von Verpackungsmaterial initiiert wird und/oder bei dessen Unterschreitung keine Bereitstellung initiiert wird.

Alternativ oder zusätzlich kann das Betätigen durch Mitteilen einer Betätigungskraft an das manipulierte Verpackungsmaterial erfolgen. Vorzugsweise wird die Betätigungskraft durch Ziehen an dem manipulierten Verpackungsmaterial, insbesondere mit einer Kraft von 5 Newton bis 100 Newton, 10 Newton bis 75 Newton oder 20 Newton bis 50 Newton, aufgebracht. Alternativ oder zusätzlich kann die Betätigungskraft über einen Weg, über den das Verpackungsmaterial in Folge der Kraft bewegt wird, wie über wenigstens 2 mm, 5 mm, 10 mm, 20 mm, 30 mm oder 50 mm aufgebracht werden. Die Kraft und/oder der Weg über den dem Verpackungsmaterial die Betätigungskraft mitgeteilt wird ist vorzugsweise vorbestimmt, insbesondere in einer Steuereinheit hinterlegt, welche bei Betätigung des manipulierten Verpackungsmaterials prüft, ob die vorbestimmte Kraft und/oder der vorbestimmte Weg detektiert wurde. Wird die vorbestimmte Kraft und/oder der vorbestimmte Weg erreicht, initiiert die Steuereinheit vorzugsweise die Bereitstellung des Verpackungsmaterial, wohingegen die Bereitstellung bei unterschreiten der vorbestimmten Kraft und/oder des vorbestimmten Weges vorzugsweise ausbleibt. Dadurch kann insbesondere eine unbeabsichtigte Initiierung der Bereitstellung von Verpackungsmaterial, beispielsweise in Folge eines versehentlichen Betätigens durch eine Bedienperson, weitestgehend vermieden werden.

In einer bevorzugten Ausführungsform der vorliegenden Erfindung befindet sich das manipulierte Verpackungsmaterial zu Beginn der Betätigung im Eingriff mit der Verpackungsmaterialbereitstellungsvorrichtung, insbesondere in Eingriff mit einer Manipulationsvorrichtung, wie einer Fördervorrichtung oder einer Umformvorrichtung. Der Eingriff umfasst vorzugsweise ein Halten des manipulierten Verpackungsmaterials mit einer Haltekraft, wobei die Haltekraft vorzugsweise wenigstens 10 Newton, 50 Newton, 100 Newton, 150 Newton, 250 Newton, 350 Newton, 450 Newton, 550 Newton, 700 Newton oder 900 Newton beträgt.

Die Manipulationsvorrichtung kann eine Fördervorrichtung, wie ein Förderradpaar oder ein einzelnes Förderrad, aufweisen. In einer Ausführungsform, in der die Manipulationsvorrichtung im Wesentlichen durch die Fördervorrichtung gebildet ist, besteht die Manipulation des Faserausgangsmaterial insbesondere darin, eine vorbestimmte Länge des Faserausgangsmaterials zu dem Ausgabebereich der Verpackungsmaterialbereitstellungsvorrichtung zu fördern, und es dadurch bereitzustellen. Die Ausgestaltung einer Manipulationsvorrichtung in Form einer Umformvorrichtung kann beispielsweise durch die Kombination einer Fördereinrichtung und eines Umformtrichters ausgebildet sein. Dabei erfolgt die Umformung insbesondere durch Einziehen, insbesondere mit der Fördervorrichtung, des Faserausgangsmaterials in den Umformtrichter mittels der Fördervorrichtung.

Vorzugsweise wird die Haltekraft über die Fördervorrichtung aufgebracht. Beispielsweise kann die Haltekraft durch Klemmkräfte zwischen dem Verpackungsmaterial und der Fördervorrichtung bereitgestellt werden. Dafür kann beispielsweise ein Förderrad derart gegen eine Wandung vorgespannt sein, dass eine Haltekraft, insbesondere eine vorbestimmte Haltekraft, auf das manipulierte Verpackungsmaterial wirkt. Besonders bevorzugt wird die Haltekraft durch das Verspannen von zwei Förderrädern eines Förderradpaars realisiert.

In einer bevorzugten Ausführungsform der vorliegenden Erfindung erfolgt die Betätigung durch eine Bedienperson, die vorzugsweise das manipulierte Verpackungsmaterial manuell betätigt, insbesondere greift. Alternativ oder zusätzlich erfolgt die Betätigung an einem aus der Verpackungsmaterialbereitstellungsvorrichtung herausragenden Bereich des manipulierten Verpackungsmaterials. Besonders bevorzugt ragt ein Abschnitt des manipulierten Verpackungsmaterials im Ausgabebereich der Vorrichtung um wenigstens 5 cm, 10 cm, 20 cm, 30 cm, 40 cm oder 50 cm heraus, sodass vorzugsweise eine Bedienperson das Verpackungsmaterial greifen kann, ohne in Kontakt mit möglicherweise scharfen Kanten der Vorrichtung zu kommen.

In einer Ausgestaltung der vorliegenden Erfindung umfasst die Manipulation ein Umformen einer ein- oder mehrlagigen Papierbahn, insbesondere aus Recyclingpapier, in einen Papierpolsterstrang. Dazu wird vorzugsweise eine ein oder mehrlagigen Papierbahn in eine Umformvorrichtung, wie beispielsweise in einen Umformtrichter, eingezogen, insbesondere über eine Fördervorrichtung, wie ein Förderradpaar, wobei die ein- oder mehrlagigen Papierbahn in einen dreidimensionalen Strang, insbesondere einen Papierpolsterstrang, umgeformt wird. Anschließend kann ein Papierpolstererzeugnis von dem Papierpolsterstrang abgetrennt werden, insbesondere über eine Ablängvorrichtung. Alternativ oder zusätzlich kann der Papierpolsterstrang gespannt werden, insbesondere zwischen zwei Fördervorrichtungen, wie zwei Förderradpaaren. Das Spannen kann ein dem Abtrennen vorgelagerte Schritt sein, oder selbst zum Abtrennen genutzt werden, indem das Verpackungsmaterial derart stark gespannt wird, dass es durch Reißen getrennt wird. Alternativ oder zusätzlich kann die Manipulation in dem Fördern eines Wellpappenbahnabschnitts, insbesondere vorbestimmter Länge, von einer Wellpappenbahn umfassen. Dabei wird vorzugsweise eine vorbestimmte Länge an Wellpappenbahn gefördert, insbesondere von einem Leporello Stapel, und einer Bedienperson über den Ausgabebereich der Vorrichtung bereitgestellt.

In einer Ausführungsform der vorliegenden Erfindung umfasst die Manipulation ein Abtrennen eines Papierpolstererzeugnisses, insbesondere vorbestimmter Länge, von einem Papierpolsterstrang, wobei die Manipulation ferner vorzugsweise ein dem Abtrennen vorangehendes Umformen einer ein- oder mehrlagigen Papierbahn in den Papierpolsterstrang umfasst. Alternativ oder zusätzlich umfasst das Manipulieren ein Abtrennen eines Wellpappenbahnabschnitts, insbesondere vorbestimmter Länge, von einer Wellpappenbahn, wobei die Manipulation ferner vorzugsweise ein dem Abtrennen vorangehendes Fördern des Wellpappenbahnabschnitts von der Wellpappenbahn umfasst.

In einer bevorzugten Ausführungsform bewirkt die Betätigung des manipulierten Verpackungsmaterials eine Drehbewegung eines Rotors, insbesondere eines eine Arbeitseinrichtung, wie eine Fördereinrichtung oder eine Umformeinrichtung, antreibenden Elektromotors. Dabei erfolgt die Initiierung vorzugsweise durch Erfassen der Drehbewegung des Rotors, insbesondere mit einer Einrichtung zum Erfassen der Position des Rotors. Besonders bevorzugt bewirkt die Betätigung des manipulierten Verpackungsmaterials insbesondere eine Drehbewegung des Rotors um einen vorbestimmten Mindestwinkel von 10° bis 60°, 20° bis 50° oder 30° bis 40°. Die Drehbewegung des Rotors kann insbesondere, wie im Zusammenhang mit dem ersten Aspekt der vorliegenden Erfindung beschrieben, mit einer Sensoranordnung erfasst werden, die gleichzeitig für die Ansteuerung einer mit einem Erregerstrom beaufschlagten Spulenanordnung des Rotors oder des Stators eingesetzt wird. Ferner kann die Drehbewegung des Rotors insbesondere, wie im Zusammenhang mit dem ersten Aspekt der vorliegenden Erfindung beschrieben, durch Auswerten von in einer mit einem Erregerstrom beaufschlagten Spulenanordnung durch die Drehbewegung des Rotors induzierten Signalen erfolgen. Vorzugsweise wird bei Erfassen eines durch die Drehbewegung des Rotors induzierten Signals abgefragt, ob die Spulenanordnung mit einem Erregerstrom beaufschlagt ist. Ist dies nicht der Fall wird vorzugsweise die Bereitstellung von Verpackungsmaterial initiiert. Vorzugsweise erfolgt die Initiierung dadurch, dass die Betätigung des Verpackungsmaterials, insbesondere die sich dadurch ergebende Drehbewegung des Rotors und gegebenenfalls die Information, dass die Spulenanordnung nicht mit einem Erregerstrom beaufschlagt ist, an eine übergeordnete Steuereinheit kommuniziert wird, woraufhin die übergeordnete Steuereinheit vorzugsweise wenigstens eine, besonders bevorzugt zwei oder drei, Steueruntereinheiten, wie elektromotoreigene Steuereinheiten, für die Bereitstellung durch Manipulation ansteuert.

In einer bevorzugten Ausführungsform wird das manipulierte, betätigte Verpackungsmaterial vor dem Initiieren der Manipulation des Faserausgangsmaterials von dem Faserausgangsmaterial, wie einer ein- oder mehrlagigen Papierbahn oder einer Wellpappenbahn, oder von einem aus einer ein- oder mehrlagigen Papierbahn umgeformten Papierpolsterstrang abgetrennt und/oder aus der Verpackungsmaterialbereitstellungsvorrichtung herausgefördert. Dadurch kann insbesondere das Risiko einer Verpackungsmaterialverstopfung reduziert werden.

Das im Zusammenhang mit dem fünften Aspekt der vorliegenden Erfindung beschrieben Verfahren ist insbesondere ein Verfahren zum Betreiben einer Verpackungsmaterialbereitstellungsvorrichtung, die wenigstens eine mechanisch anzutreibende Arbeitseinrichtung und wenigstens einen die Arbeitseinrichtung antreibenden Elektromotor aufweist. Insbesondere weist die Verpackungsmaterialbereitstellungsvorrichtung wenigstens eine elektromotoreigene Steueruntereinheit auf, die den wenigstens einen Elektromotor steuert und/oder regelt. Alternativ oder zusätzlich weist die Verpackungsmaterialbereitstellungsvorrichtung eine Steuereinheit, insbesondere eine übergeordnete Steuereinheit, auf, welche die Manipulation des Faserausgangsmaterials steuert. Insbesondere wird nach der Imitierung der Manipulation, die Manipulation teilautomatisch, insbesondere vollautomatisch, durch die Steuereinheit gesteuert. Insbesondere kann, nach der Betätigung des manipulierten Verpackungsmaterials (eines ersten Verpackungsmaterials), das betätigte Verpackungsmaterial aus der Vorrichtung ausgegeben werden. Daraufhin kann insbesondere ein zweites Verpackungsmaterial insbesondere durch Antreiben wenigstens einer elektrisch angetriebenen Arbeitseinrichtung erzeugt werden. Daraufhin kann das zweite Verpackungsmaterial insbesondere derart im Ausgabebereich bereitgestellt werden, dass das zweite Verpackungsmaterial zum Initiieren der Bereitstellung eines dritten Verpackungsmaterials betätigt werden kann. Unter einer teilautomatischen Manipulation ist insbesondere zu verstehen, dass einer oder mehrere dieser Schritte und/oder einer oder mehrere der zuvor oder nachfolgend beschriebenen Schritte durch die Steuereinheit gesteuert werden. Unter einer vollautomatischen Manipulation ist insbesondere zu verstehen, dass, abgesehen von der Betätigung, sämtliche dieser Schritte und/oder der zuvor oder nachfolgend beschriebenen Schritte durch die Steuereinheit gesteuert werden. Durch den Einsatz einer vollautomatischen Manipulation kann insbesondere ein Verfahren bereitgestellt werden, bei dem in Folge einer Betätigung eines bereits manipulierten Verpackungsmaterials ein weiteres Verpackungsmaterial vollautomatisch bereitgestellt wird.

Die im Zusammenhang mit dem dritten, vierten und/oder fünften Aspekt der vorliegenden Erfindung beschriebenen Verfahren können insbesondere Verfahren zum Betreiben einer Vorrichtung gemäß dem ersten und/oder zweiten Aspekt der vorliegenden Erfindung sein. Wie zuvor und nachfolgend beschrieben, kann die Manipulation des Faserausgangsmaterials einzeln oder in Kombination sowohl das Fördern, das Abtrennen und das Umformen des Faserausgangsmaterials umfassen. Bevorzugt umfasst die Manipulation jedoch wenigstens das Abtrennen oder das Umformen von Faserausgangsmaterial. In Einsatzgebieten bzw. Ausführungsformen, bei denen die Manipulation ausschließlich in der Förderung des Faserausgangsmaterials besteht, umfasst die Förderung insbesondere das Abfördern des Faserausgangsmaterials von einer Materialbahnrolle oder von einem Verpackungsmaterialstapel. Besonders bevorzugt betrifft das im Zusammenhang mit dem dritten, vierten und/oder fünften Aspekt der vorliegenden Erfindung beschriebene Verfahren ein Verfahren zum Betreiben einer Verpackungsmaterialerzeugungsvorrichtung. Unter einer Verpackungsmaterialerzeugungsvorrichtung ist insbesondere eine Vorrichtung zu verstehen, bei der die Manipulation wenigstens ein Umformen und/oder ein Abtrennen des Faserausgangsmaterials umfasst. Insbesondere kann das im Zusammenhang mit dem dritten, vierten und/oder fünften Aspekt der vorliegenden Erfindung beschriebene Verfahren ein Verfahren zum Betreiben einer Polstermaterialerzeugungsvorrichtung betreffen. Unter einer Polstermaterialerzeugungsvorrichtung ist insbesondere ein Vorrichtung zu verstehen, bei der die Manipulation eine Umformung umfasst, bei der aus einer ein- oder mehrlagigen Bahn von Ausgangsmaterial, insbesondere aus einer ein-oder mehrlagigen Papierbahn, ein dreidimensionaler Polsterstrang, insbesondere ein dreidimensionaler Papierpolsterstrang, erzeugt wird.

Ein sechster Aspekt der vorliegenden Erfindung betrifft ein Verpackungsmaterial, wie ein Papierpolstermaterialstrang oder ein Wellpappenbahnabschnitt, das durch, insbesondere mittels, eine Vorrichtung gemäß dem ersten und/oder zweiten Aspekt der vorliegenden Erfindung hergestellt ist. Alternativ oder zusätzlich betrifft der sechste Aspekt der vorliegenden Erfindung ein Verpackungsmaterial, das gemäß einem Verfahren gemäß dem dritten, vierten und/oder fünften Aspekt der vorliegenden Erfindung hergestellt ist.

Wenn im Zusammenhang der vorliegenden Erfindung von Faserausausgangsmaterial gesprochen wird handelt es sich insbesondere um eine bevorzugte Ausführungsform bzw. um ein bevorzugtes Einsatzgebiet der vorliegenden Erfindung. Vorzugsweise können sowohl die Vorrichtungen gemäß dem ersten und/oder zweiten Aspekt der vorliegenden Erfindung als auch die Verfahren gemäß dem dritten, vierten und/oder fünften Aspekt der vorliegenden Erfindung zur Manipulation von Ausgangsmaterial im Allgemeinen, also für die Manipulation von Faserausgangsmaterial, für die Manipulation von faserfreiem Ausgangsmaterial, wie Kunststoff, und/oder für die Manipulation von Verbundmaterial, wie Kombinationen aus Faserausgangsmaterial und faserfreiem Ausgangsmaterial, eingesetzt werden.

Das erfindungsgemäße Verfahren gemäß dem dritten, vierten und/oder fünften Aspekt der vorliegenden Erfindung kann insbesondere derart ausgelegt sein, dass es mit der erfindungsgemäßen Vorrichtung gemäß dem ersten und/oder zweiten Aspekt der vorliegenden Erfindung ausgeführt werden kann.

Die erfindungsgemäße Vorrichtung gemäß dem ersten und/oder zweiten Aspekt der vorliegenden Erfindung kann insbesondere derart strukturiert sein, dass das erfindungsgemäße Verfahren gemäß dem dritten, vierten und/oder fünften Aspekt der vorliegenden Erfindung ausgeführt werden kann.

Insbesondere betrifft die Erfindung die folgenden insbesondere mit oben erläuterten Aspekten kombinierbaren nummerierten Gegenstände. Die Erfindung betrifft eine:
Gegenstand 1: Vorrichtung (601) zum Bereitstellen von Verpackungsmaterial, wie einen Wellpappenbahnabschnitt oder einen Papierpolstermaterialstrang, durch Manipulation, insbesondere Umformen, Fördern und/oder Abtrennen, eines Faserausgangsmaterials, wie einer ein- oder mehrlagigen Papierbahn oder einer Wellpappenbahn, umfassend:
   wenigstens eine mechanisch anzutreibende Arbeitseinrichtung (7), wie eine Deformationseinrichtung, insbesondere ein Deformationsradpaar, eine Fördereinrichtung, insbesondere ein Förderradpaar (613, 615), oder eine Ablängvorrichtung (603), insbesondere ein Rotationsschneider oder ein Translationsschneider;
   wenigstens einen die Arbeitseinrichtung (7) antreibenden Elektromotor (9) mit einem ortsfesten Stator, einem dazu beweglich gelagerten Rotor und einer mit einem Erregerstrom beaufschlagten Spulenanordnung des Rotors oder des Stators
   wobei der Elektromotor (9) frei einer elektrischen Kontaktkopplung zum Übertragen des Erregerstroms zwischen dem Stator und dem Rotor ist und eine Einrichtung (11) zum Erfassen der Position des Rotors umfasst.
Gegenstand 2: Vorrichtung (601) nach Gegenstand 1, wobei der wenigstens eine Elektromotor (9) ein bürstenloser Gleichstrommotor oder ein Schrittmotor ist, und/oder dass der wenigstens eine Elektromotor (9) ein permanenterregter Motor ist und/oder dass der wenigstens eine Elektromotor (9) ein Synchronmotor ist.
Gegenstand 3: Vorrichtung (601) nach Gegenstand 1 oder 2, wobei die Positionserfassungseinrichtung (11) wenigstens einen, vorzugsweise drei, insbesondere elektromagnetischen Sensor, wie einen Hall-Sensor, einen Resolver oder einen Strichgeber, zum Messen eines durch die Drehbewegung des Rotors induzierten Signals aufweist, wobei das Signal vorzugweise durch Drehen des Rotors um einen vorbestimmten Winkel, besonders bevorzugt um 10 bis 60°, 20 bis 50° oder 30 bis 40° erzeugt wird.
Gegenstand 4: Vorrichtung (601) nach Gegenstand 3, wobei die Positionserfassungseinrichtung (11) eine Auswertevorrichtung, insbesondere eine Steuereinheit, wie eine elektromotoreigne Steuereinheit, aufweist, die aus wenigstens einem von der Positionserfassungseinrichtung (11) gemessenen Signal die Position des Rotors berechnet und vorzugsweise das Signal, einen Referenzwert oder die Position des Rotors speichert, insbesondere zählt, und daraus den von dem Rotor über einen bestimmten Zeitraum zurückgelegten Winkel, insbesondere die zurückgelegten Umdrehungen, berechnet.
Gegenstand 5: Vorrichtung (601) nach einem der vorstehenden Gegenstände, wobei die Positionserfassungseinrichtung (11) eine Auswertevorrichtung, insbesondere eine Steuereinheit, wie eine elektromotoreigne Steuereinheit, zum Messen eines durch eine Drehbewegung des Rotors in der Spulenanordnung induzierten Signals, wie eines Stroms und/oder einer Spannung, aufweist, die vorzugsweise aus dem gemessenen Signal die Position des Rotors berechnet, diese vorzugsweise speichert und daraus vorzugsweise den von dem Rotor über einen bestimmten Zeitraum zurückgelegten Winkel, insbesondere die zurückgelegten Umdrehungen, berechnet.
Gegenstand 6: Vorrichtung (601) nach Gegenstand 4 oder 5, wobei die Auswertevorrichtung im Falle des Messens eines durch die Drehbewegung des Rotors induzierten Signals, abfragt, ob die Spulenanordnung mit einem Erregerstrom beaufschlagt wird, und, sofern die Spulenanordnung nicht mit einem Erregerstrom beaufschlagt wird, die Bereitstellung von Verpackungsmaterial (3) durch Manipulation des Faserausgangsmaterials initiiert wird.
Gegenstand 7: Vorrichtung (601) nach Gegenstand 6, wobei eine übergeordnete Steuereinheit (15) zum Ansteuern einer Steueruntereinheit (13), wie eine elektromotoreigne Steueruntereinheit, wobei die Steueruntereinheit (13) die Bereitstellung durch Manipulation dadurch initiiert, dass ein Auslösesignal an die übergeordnete Steuereinheit (15) übertragen wird, woraufhin die übergeordnete Steuereinheit (15) vorzugsweise wenigstens eine, besonders bevorzug zwei oder drei, Steueruntereinheit (13) für die Bereitstellung durch Manipulation ansteuert. Gegenstand 8: Vorrichtung (601) nach einem der vorstehenden Gegenstände, wobei die wenigstens eine angetriebene Arbeitseinrichtung (7) eine Fördereinrichtung mit wenigstens einem Förderrad ist, das derart mit dem Rotor des Elektromotors gekoppelt ist, dass eine Drehbewegung des Förderrades eine Drehbewegung des Rotors bewirkt, wobei die Kopplung vorzugsweise ein Getriebe, insbesondere ein Schneckengetriebe, umfasst, das vorzugsweise die Drehzahl des Rotors auf eine Drehzahl des Förderrades untersetzt, insbesondere mit einem Untersetzungsverhältnis von 3 zu 1 bis 10 zu 1, vorzugsweise von etwa 5 zu 1.
Gegenstand 9: Vorrichtung (601) nach einem der vorstehenden Gegenstände, wobei die wenigstens eine angetriebene Arbeitseinrichtung (7) ein Förderradpaar (613, 615) ist, wobei wenigstens ein Förderrad von dem Elektromotor (9) angetrieben ist und/oder
   die Förderräder gegeneinander verspannt sind, insbesondere mit einer Kraft von wenigstens 10 Newton, 50 Newton, 100 Newton, 150 Newton, 250 Newton, 350 Newton, 450 Newton, 550 Newton, 700 Newton oder 900 Newton, und/oder
   der Radachsabstand (AA, ZA) der Förderräder jeweils eines Förderadpaares (613, 615) derart unterdimensioniert ist, dass die Förderräder gegeneinander elastisch vorgespannt sind.
Gegenstand 10: Vorrichtung (601) nach einem der vorstehenden Gegenstände, wobei wenigstens zwei der mechanisch anzutreibenden Arbeitseinrichtungen (7), wobei vorzugsweise eine Arbeitseinrichtung (7) eine Fördervorrichtung, wie ein Förderradpaar (613, 615), ist und eine Arbeitseinrichtung (7) eine Ablängvorrichtung (603) ist und/oder wobei beide Arbeitseinrichtungen (7) Fördervorrichtungen, wie ein Zuförderradpaar (613) und ein Abförderradpaar (615) sind, und vorzugsweise eine dritte der mechanisch anzutreibenden Arbeitseinrichtungen (7) vorgesehen ist, die eine Ablängvorrichtung (603) ist, die besonders bevorzugt in Förderrichtung zwischen den zwei Fördervorrichtungen angeordnet ist, und/oder wobei die wenigstens zwei, vorzugsweise drei Arbeitseinrichtungen (7) jeweils von einem eigenen Elektromotor (9) angetrieben werden.
Gegenstand 11: Vorrichtung (601) zum Bereitstellen von Verpackungsmaterial, wie einen Wellpappenbahnabschnitt oder einen Papierpolstermaterialstrang, durch Manipulation, insbesondere Umformen, Fördern und/oder Abtrennen, eines Faserausgangsmaterials, wie einer ein- oder mehrlagigen Papierbahn oder einer Wellpappenbahn, umfassend:
   wenigstens eine mechanisch anzutreibende Arbeitseinrichtung (7), wie eine Deformationseinrichtung, insbesondere ein Deformationsradpaar, eine Fördereinrichtung, insbesondere ein Förderradpaar (613, 615), oder eine Ablängvorrichtung (603), insbesondere ein Rotationsschneider oder ein Translationsschneider; und
   wenigstens einen die Arbeitseinrichtung (7) antreibenden Elektromotor (9),
   wobei wenigstens eine elektromotoreigene Steueruntereinheit (13) zum Steuern- und/oder Regeln des Elektromotors (9),
   eine übergeordnete Steuereinheit (15) zum Ansteuern der wenigstens einen Steueruntereinheit (13) und
   eine Kommunikationsverbindung (17) zum Datenaustausch zwischen der wenigstens einen elektromotoreigenen Steueruntereinheit (13) und der übergeordneten Steuereinheit (15) mit der BUS-Technologie, wie der CAN-BUS-Technologie.
Gegenstand 12: Vorrichtung nach Gegenstand 11, wobei die Steueruntereinheit (13) einen den Elektromotor (9) ansteuernden Erregerstrom misst und bei überschreiten eines vorgegebenen, zulässigen Stromes, den Erregerstrom unterbricht, um insbesondere bei Verpackungsmaterialverstopfungen in der Vorrichtung (601) ein Überhitzen des Elektromotors, der Steueruntereinheit (13) und/oder der übergeordneten Steuereinheit (15) zu vermeiden.
Gegenstand 13: Vorrichtung (601) nach Gegenstand 11 oder 12, wobei die Steueruntereinheit (13) einen Frequenzumrichter, vorzugsweise einen ein-Phasen Frequenzumrichter mit einem Netzteil und einer Steuerung, aufweist.
Gegenstand 14: Vorrichtung (601) nach einem der Gegenstände 11 bis 13, wobei eine insbesondere ferritische Abschirmung, welche die wenigstens eine Steueruntereinheit (13) von der Umgebung gegenüber elektromagnetischen Störsendungen abschirmt, und/oder durch
   eine insbesondere ferritische Abschirmung, welche die wenigstens eine Steueruntereinheit (13) und die übergeordnete Steuereinheit (15) und vorzugsweise zusätzlich den wenigstens einen Elektromotor (9) gegenüber elektromagnetischen Störsendungen abschirmt, und/oder durch
   eine insbesondere ferritische Abschirmung der wenigstens einen Steueruntereinheit (13), des wenigstens einen Elektromotors (9), der übergeordneten Steuereinheit (15) und der wenigstens einen Arbeitseinrichtung (7), welche die wenigstens eine Steueruntereinheit (13), den wenigstens einen Elektromotor (9), die übergeordnete Steuereinheit (15) und die wenigstens eine Arbeitseinrichtung (7) gegenüber elektromagnetischen Störsendungen abschirmt, und/oder wobei
   vorzugsweise wenigstens eine ferritische Abschirmung durch das Gehäuse der Vorrichtung (601) ausgebildet ist.
Gegenstand 15: Vorrichtung (601) nach einem der vorstehenden Gegenstände, wobei die Arbeitseinrichtung (7) eine Ablängvorrichtung (603) zum Abtrennen des manipulierten Verpackungsmaterials, insbesondere eines Papierpolstererzeugnisses von einem in der Vorrichtung (601) aus eine ein- oder mehrlagigen Papierbahn umgeformten, dreidimensionalen Papierpolsterstrangs oder eines Wellpappenbahnabschnitts von einer Wellpappenbahn, ist.
Gegenstand 16: Vorrichtung (601) nach einem der vorstehenden Gegenstände, wobei eine der Arbeitseinrichtung (7) in Förderrichtung (F) flussaufwärts angeordnete Zufördervorrichtung, wie ein Zuförderradpaar (613), zum Fördern des Verpackungsmaterials und vorzugsweise durch
   einen zweiten die flussaufwärts angeordnete Zufördervorrichtung antreibenden Elektromotor (9) und vorzugsweise durch
   eine zweite elektromotoreigene Steueruntereinheit (13) zum Steuern- und/oder Regeln des zweiten Elektromotors, wobei die zweite Steueruntereinheit (13) und die übergeordnete Steuereinheit (15) über die Kommunikationsverbindung (17) miteinander verbunden sind.
Gegenstand 17: Vorrichtung (601) nach Gegenstand 16, wobei eine der Arbeitseinrichtung (7) in Förderrichtung (F) flussabwärts angeordnete Abfördervorrichtung, wie ein Abförderradpaar (615), zum Abfördern des Verpackungsmaterials und vorzugsweise durch
   einen dritten die flussabwärts angeordnete Abfördervorrichtung antreibenden Elektromotor (9) und vorzugsweise durch
   eine dritte elektromotoreigene Steueruntereinheit (13) zum Steuern- und/oder Regeln des dritten Elektromotors (9), wobei die dritte Steueruntereinheit (13) und die übergeordnete Steuereinheit (15) über die Kommunikationsverbindung (17) miteinander verbunden sind.
Gegenstand 18: Vorrichtung (601) nach Gegenstand 17, wobei der Zufördervorrichtung und der Abfördervorrichtung jeweils ein eigener Elektromotor (9) zum voneinander unabhängigen Antreiben und/oder Abbremsen der Fördervorrichtungen zugeordnet ist, wobei die Elektromotoren vorzugsweise derart angetrieben werden, dass die Zufördervorrichtung und die Abfördervorrichtung das manipulierte Verpackungsmaterial, insbesondere vor einem Abtrennen eines Papierpolstererzeugnisses von einem in der Vorrichtung (601) aus eine ein- oder mehrlagigen Papierbahn umgeformten, dreidimensionalen Papierpolsterstrang, spannen und/oder dass
   das Abförderradpaar (615) beim Auftreten einer Verpackungsmaterialverstopfung entgegengesetzt zur Förderrichtung (F) angetrieben wird.
Gegenstand 19: Verfahren zum Bereitstellen von Verpackungsmaterial, wobei das Verfahren mit einer Vorrichtung (1) nach einem der Gegenstände 1 bis 18 durchgeführt wird.
Gegenstand 20: Verfahren zum Betreiben einer Verpackungsmaterialbereitstellungsvorrichtung, bei dem durch Manipulation, insbesondere Umformen und/oder Fördern, eines Faserausgangsmaterials, wie einer ein- oder mehrlagigen Papierbahn oder einer Wellpappenbahn, Verpackungsmaterial, wie ein Papierpolstermaterialstrang oder ein Wellpappenbahnabschnitt, bereitgestellt wird, wobei die die Verpackungsmaterialbereitstellungsvorrichtung (601) wenigstens eine mechanisch anzutreibende Arbeitseinrichtung (7) und wenigstens einen die Arbeitseinrichtung (7) antreibenden Elektromotor (9) mit einem ortsfesten Stator und einen dazu beweglich gelagerten Rotor aufweist, wobei das Verfahren folgende Schritte umfasst:
   1. Erfassen der Position des Rotors;
   2. Ansteuern wenigstens einer Spule einer Spulenanordnung auf Grundlage der erfassten Position des Rotors mit einem Erregerstrom zum Versetzen des Rotors in eine neue Position.
Gegenstand 21: Verfahren nach Gegenstand 20, wobei
   Schritt 1 folgende Unterschritte umfasst:
   1a. Messen eines durch die Drehbewegung des Rotors induzierten Signals,
   1b. Berechnen der Rotorposition auf Grundlage des Signals und vorzugsweise
   1c. Speichern, insbesondere Zählen, des Signals, eines Referenzwertes oder der Position des Rotors und vorzugsweise
   1d. Berechnen des von dem Rotor über einen bestimmten Zeitraum zurückgelegten Winkels, insbesondere die zurückgelegten Umdrehungen.
Gegenstand 22: Verfahren zum Betreiben einer Verpackungsmaterialbereitstellungsvorrichtung, bei dem durch Manipulation, insbesondere Umformen und/oder Fördern, eines Faserausgangsmaterials, wie einer ein- oder mehrlagigen Papierbahn oder einer Wellpappenbahn, Verpackungsmaterial, wie ein Papierpolstermaterialstrang oder ein Wellpappenbahnabschnitt, bereitgestellt wird, wobei die Verpackungsmaterialbereitstellungsvorrichtung (601) wenigstens eine mechanisch anzutreibende Arbeitseinrichtung (7) und wenigstens einen die Arbeitseinrichtung (7) antreibenden Elektromotor (9) aufweist, wobei wenigstens eine elektromotoreigene Steueruntereinheit (13) den Elektromotor, insbesondere mit einem Verfahren nach Gegenstand 20 oder 21, steuert und/oder regelt und eine übergeordnete Steuereinheit (15) über eine Kommunikationsverbindung (17) Daten mittels der Bus-Technologie, wie der CAN-BUS-Technologie, mit der elektromotoreigenen Steueruntereinheit (13) austauscht.
Gegenstand 23: Verfahren zum Betreiben einer Verpackungsmaterialbereitstellungsvorrichtung, bei dem durch Manipulation, insbesondere Umformen und/oder Fördern, eines Faserausgangsmaterials, wie einer ein- oder mehrlagigen Papierbahn oder einer Wellpappenbahn, Verpackungsmaterial, wie ein Papierpolstermaterialstrang oder ein Wellpappenbahnabschnitt, bereitgestellt wird, wobei das Manipulieren durch Betätigen des manipulierten Verpackungsmaterials im Ausgabebereich (39) der Verpackungsmaterialbereitstellungsvorrichtung (601) initiiert wird.
Gegenstand 24: Verfahren nach Gegenstand 23, wobei das Betätigen durch Bewegen des manipulierten Verpackungsmaterials erfolgt und die Initiierung vorzugsweise durch Detektieren der Bewegung, insbesondere mit einem dem Ausgabebereich (39) zugeordneten Sensor, wie einem Lichtsensor, erfolgt.
Gegenstand 25: Verfahren nach Gegenstand 23 oder 24, wobei das Betätigen durch Mitteilen einer Betätigungskraft an das manipulierte Verpackungsmaterial (3) erfolgt, vorzugsweise durch Ziehen an dem manipulierten Verpackungsmaterial, insbesondere mit einer vorbestimmten Kraft, wie 5 Newton bis 100 Newton, 10 Newton bis 75 Newton oder 20 Newton bis 50 Newton und/oder, über einen vorbestimmten Weg, wie über wenigstens 2 mm, 5 mm, 10 mm, 20 mm, 30 mm oder 50 mm.
Gegenstand 26: Verfahren nach einem der Gegenstände 23 bis 25, wobei das manipulierte Verpackungsmaterial (3) sich zu Beginn der Betätigung im Eingriff mit der Verpackungsmaterialbereitstellungsvorrichtung (601) befindet, insbesondere in Eingriff mit einer Manipulationsvorrichtung, wie einer Fördervorrichtung oder einer Umformvorrichtung, wobei der Eingriff vorzugsweise ein Halten des manipulierten Verpackungsmaterials mit einer Haltekraft umfasst, wobei die Haltekraft vorzugsweise wenigstens 10 Newton, 50 Newton, 100 Newton, 150 Newton, 250 Newton, 350 Newton, 450 Newton, 550 Newton, 700 Newton oder 900 Newton beträgt.
Gegenstand 27: Verfahren nach einem der Gegenstände 23 bis 26, wobei die Betätigung durch eine Bedienperson erfolgt, die vorzugsweise das manipulierte Verpackungsmaterial (3) manuell betätigt, insbesondere greift, und/oder
   die Betätigung an einem aus der Verpackungsmaterialbereitstellungsvorrichtung (601) herausragenden Bereich des manipulierten Verpackungsmaterials erfolgt.
Gegenstand 28: Verfahren nach einem der Gegenstände 23 bis 27, wobei die Manipulation ein Umformen einer ein- oder mehrlagigen Papierbahn, insbesondere aus Recyclingpapier, in einen Papierpolsterstrang und/oder
   ein Fördern eines Wellpappenbahnabschnitts, insbesondere vorbestimmter Länge, einer Wellpappenbahn umfasst.
Gegenstand 29: Verfahren nach einem der Gegenstände 23 bis 28, wobei die Manipulation ein Abtrennen
   eines Papierpolstererzeugnisses, insbesondere vorbestimmter Länge, von einem Papierpolsterstrang umfasst, wobei die Manipulation ferner vorzugsweise ein dem Abtrennen vorangehendes Umformen einer ein- oder mehrlagigen Papierbahn in den Papierpolsterstrang umfasst, und/oder
   eines Wellpappenbahnabschnitts, insbesondere vorbestimmter Länge, von einer Wellpappenbahn umfasst, wobei die Manipulation ferner vorzugsweise ein dem Abtrennen vorangehendes Fördern eines Wellpappenbahnabschnitts einer Wellpappenbahn umfasst.
Gegenstand 30: Verfahren nach einem der Gegenstände 23 bis 29, wobei die Betätigung des manipulierten Verpackungsmaterials eine Drehbewegung eines Rotors, insbesondere eines eine Arbeitseinrichtung (7), wie eine Fördereinrichtung oder eine Umformeinrichtung, antreibenden Elektromotors (9), bewirkt und dass die Initiierung vorzugsweise durch Erfassen der Drehbewegung des Rotors, insbesondere mit einer Einrichtung (11) zum Erfassen der Position des Rotors, erfolgt.
Gegenstand 31: Verfahren nach einem der vorstehenden Gegenstände, wobei das manipulierte, betätigte Verpackungsmaterial (3) vor dem Initiieren der Manipulation des Faserausgangsmaterials von dem Faserausgangsmaterial, wie einer ein- oder mehrlagigen Papierbahn oder einer Wellpappenbahn, oder einem aus einer ein- oder mehrlagigen Papierbahn umgeformten Papierpolsterstrang abgetrennt wird und/oder aus der Verpackungsmaterialbereitstellungsvorrichtung (601) herausgefördert wird.
Gegenstand 32: Verpackungsmaterial, wie ein Papierpolstermaterialstrang oder ein Wellpappenbahnabschnitt, wobei das Verpackungsmaterial durch eine Vorrichtung gemäß einem der Gegenstände 1 bis 18 hergestellt ist und/oder gemäß einem Verfahren nach einem der Gegenstände 19 bis 31 hergestellt ist.

Weitere Vorteile, Effekte und Ausführungsformen der vorliegenden Erfindung werden aus den weiter unten abgebildeten Figuren ersichtlich. Darin zeigt:
- Fig. 1: eine Ansicht von unten in eine beispielhafte Vorrichtung, wobei die untere und obere Begrenzungswandung zur Veranschaulichung der einzelnen Bestandteile entfernt ist und die Schneide sich in einer Schneidstartstellung befindet;
- Fig. 2: eine perspektivische Ansicht von oben auf die Vorrichtung aus Fig. 1, wobei sich die Schneide in Schneidendstellung befindet;
- Fig. 3: eine perspektivische Ansicht von unten auf die Vorrichtung aus Fig. 1, wobei sich die Schneide in Schneidendstellung befindet;
- Fig. 4: eine zweite perspektivische Ansicht von unten auf die Vorrichtung aus Fig. 1, wobei sich die Schneide in Schneidendstellung befindet;
- Fig. 5: eine schematische Darstellung der Verbindung zwischen einer übergeordneten Steuereinheit, zweier untergeordneter Steueruntereinheiten und zweier Elektromotoren über eine Kommunikationsverbindung ;
- Fig. 6: eine schematische Darstellung von bekannten Verbindungen zwischen Elektromotor und Steuereinheit;
- Fig. 7: eine schematische Darstellung einer Ausführungsform der ersten vier Aspekt der vorliegenden Erfindung;
- Fig. 8: eine schematische Darstellung einer Ausführungsform des fünften Aspekt der vorliegenden Erfindung; und
- Fig. 9: eine schematische Darstellung der Verbindung einer übergeordneten Steuereinheit, einer Kommunikationsverbindung, dreier elektromotoreigenen Steueruntereinheiten, dreier Elektromotoren, und einer Positionserfassungseinrichtung und dreier Arbeitseinrichtungen

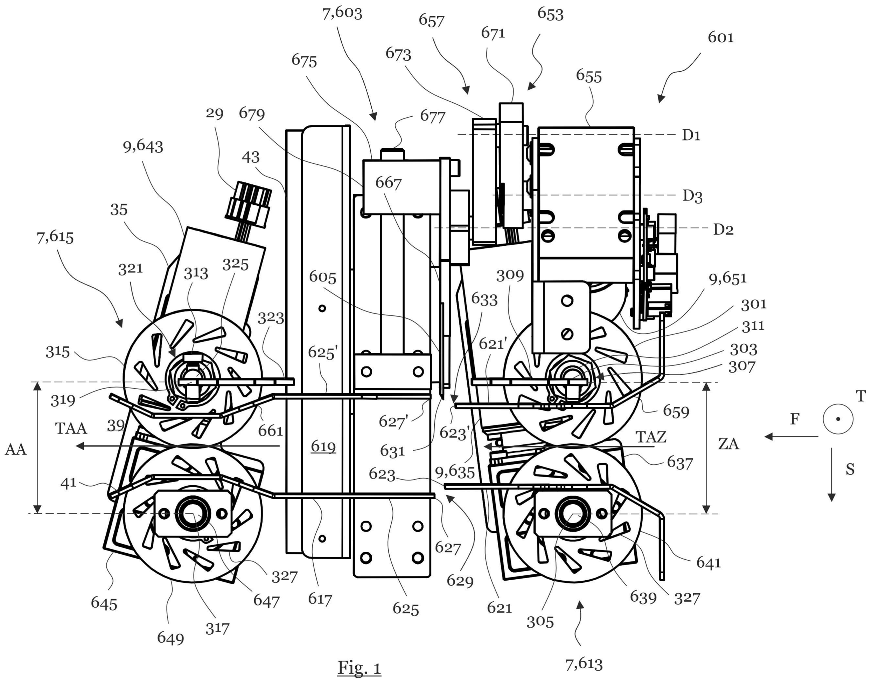

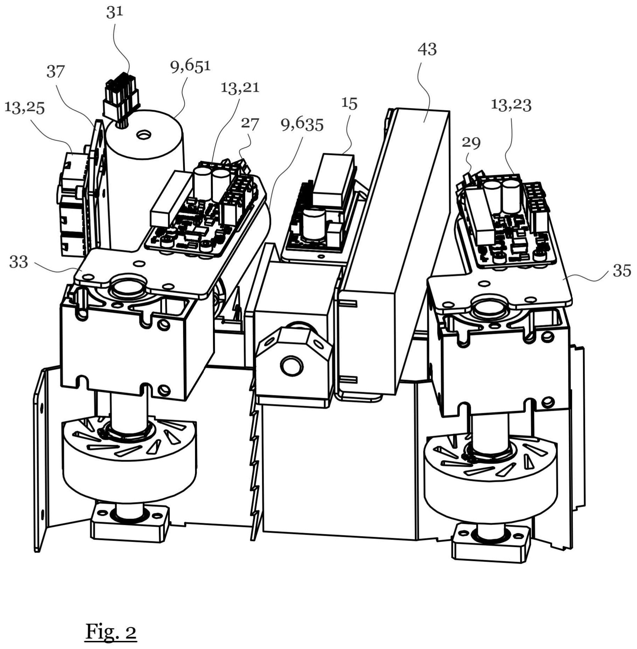

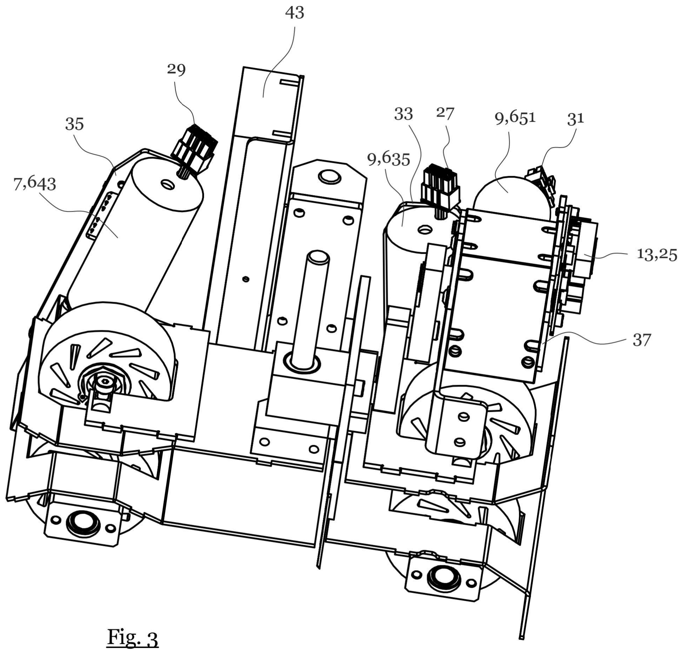

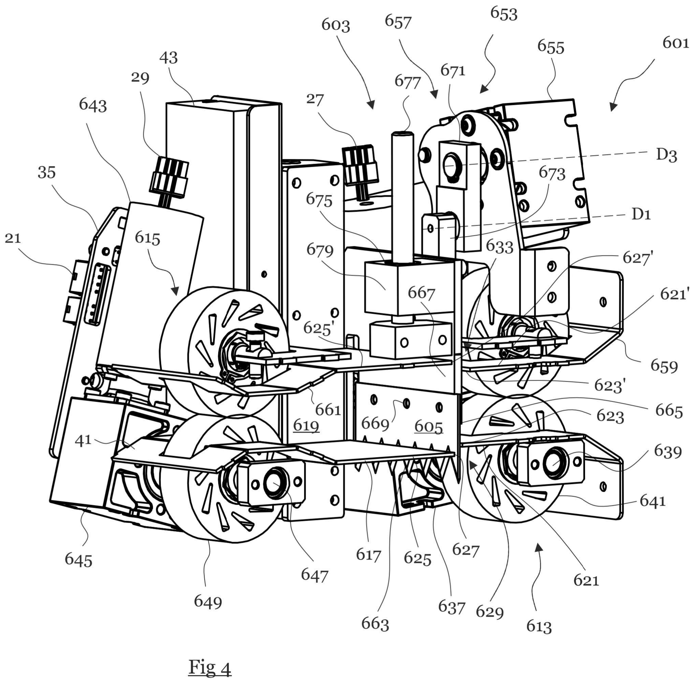

Fig. 1 zeigt eine Ansicht von unten auf eine bevorzugte Ausführungsform einer Vorrichtung 601 zum Fertigen von Verpackungsmaterialerzeugnissen, bei der eine untere und obere Begrenzungswandung, insbesondere des Förderkanals 619 ausgeblendet ist, um die einzelnen Bestandteile der Vorrichtung 601 zu zeigen, wobei sich die Schneide 605 in einer Schneidstartstellung befindet. Die Figuren 2 bis 4 zeigen jeweils perspektivische Ansichten auf die Vorrichtung 601, wobei sich die Schneide 605 in Schneidendstellung befindet.

Die Figuren 1 bis 4 zeigen eine Vorrichtung zum Bereitstellen von Verpackungsmaterial in Form von Papierpolstererzeugnissen. Dazu wird ein Verpackungsmaterialstrang in Form eines Papierpolsterstrangs einer ersten Arbeitsvorrichtung 7 in Form einer Ablängvorrichtung 603 zugeführt. Die Zuführung erfolgt über eine zweite Arbeitseinrichtung 7 in Form eines Zuförderradpaars 613. Das Zuförderradpaar 613 wird vorzugsweise ferner dazu eingesetzt ein Faserausgangsmaterial 5 in Form ein-oder mehrlagigen Papierbahn in eine Umformvorrichtung zu ziehen, in der die Papierbahn in einen Papierpolsterstrang umgeformt wird. Die Papierbahn kann beispielsweise von einer Papierbahnrolle oder einem Leporellostapel abgezogen werden. Als Umformvorrichtung kann beispielsweise ein Umformtrichter (nicht dargestellt) in Förderrichtung F stromabwärts an die Vorrichtung 601, insbesondere an das Zuförderradpaar 613 anschließen. Alternativ oder zusätzlich kann die Fördervorrichtung 601 trichterförmige Abschnitte 659, 661 aufweisen, über die das Faserausgangsmaterial umgeformt wird. Wie hier dargestellt, können beispielsweise in Förderrichtung F stromaufwärts des Zuförderradpaars 613 und des Abförderradpaars 615 trichterförmiger Abschnitte 659,661 vorgesehen sein, die in Förderrichtung F an die Förderradpaare 613, 615 anschließen. Ferner umfasst die Vorrichtung 601 eine dritte Arbeitseinrichtung 7 in Form eines Abförderradpaars 615, welches in Förderrichtung F stromabwärts der Ablängvorrichtung 603 angeordnet ist. Das Abförderradpaar 615 wird insbesondere zum Abfördern eines Papierpolstererzeugnisses eingesetzt, nachdem dieses von der Ablängvorrichtung 603 von dem Papierpolsterstrang abgetrennt wurde. Alternativ oder zusätzlich kann das Abförderradpaar 615 derart mit dem Zuförderradpaar 613 zusammenwirken, dass der Papierpolsterstrang vor dem Abtrennen gespannt wird.

In der hier dargestellten Ausführungsform ist jede dieser drei Arbeitseinrichtung über einen Antrieb 635, 643 und 651 angetrieben. Vorzugsweise ist wenigstens einer, vorzugsweise zwei besonders bevorzugt alle drei, der Antriebe 635, 643 und 651 ein Elektromotoren 9 mit einem ortsfesten Stator, einem dazu beweglich gelagerten Rotor und einer mit einem Erregerstrom beaufschlagten Spulenanordnung des Rotors oder des Stators, wobei der wenigstens eine Elektromotor 9 frei einer elektrischen Kontaktkopplung zum Übertragen des Erregerstroms zwischen dem Stator und dem Rotor ist und eine Einrichtung 11 zum Erfassen der Position des Rotors umfasst. Bei der hier dargestellten Ausführungsformen ist die Einrichtung 11 zum Erfassen der Position des Rotors, der Rotor, der Stator und die Spulenanordnung innerhalb des jeweiligen Elektromotors 635,643 und 651 ausgebildet und daher in den Figuren 1 bis 4 nicht zu sehen. Hierbei handelt es sich insbesondere um bürstenlose Gleichstrommotoren mit Hallsensoren für die Positionserfassungseinrichtung.

Besonders bevorzugt, weist wenigstens einer, vorzugsweise zwei, besonders bevorzugt alle drei, der Antriebe 635, 643 und 651 eine elektromotoreigene Steueruntereinheit 13 auf. In den hier dargestellten Figuren 1 bis 3 ist der untergeordneten Steuereinheit 13, die dem Elektromotor 635 zugeordnet ist, der das Zuförderradpaar 613 antreibt, die Bezugsziffer 21 zugeordnet. Der untergeordneten Steuereinheit 13, die dem Elektromotor 643 zugeordnet ist, der das Abförderradpaar 615 antreibt, ist die Bezugs 23 zugeordnet. Der untergeordneten Steuereinheit 13, die dem Elektromotor 651 zugeordnet ist, der die Ablängvorrichtung 603 antreibt, ist die Bezugs 25 zugeordnet. Vorzugsweise ist gemäß dem zweiten Aspekt der vorliegenden Erfindung eine übergeordnete Steuereinheit 15 zum Ansteuern wenigstens einer, vorzugsweise zweier, besonders bevorzugt aller drei, der Steueruntereinheiten 21, 23 und 25 vorgesehen. Die erfindungsgemäße Kommunikationsverbindung 17 zum Datenaustausch zwischen der wenigstens einen elektromotoreigenen Steueruntereinheit 13 und der übergeordneten Steuereinheit 15 mit der Bus-Technologie ist in den Figuren 1 bis 3 nicht dargestellt. Jedoch sind jeweils Anschlüsse 27, 29 und 31 dargestellt, über die insbesondere die Steueruntereinheiten 21, 23, 25 mit der Kommunikationsverbindung, insbesondere mit einem Kommunikationsbus, wie einem CAN-Bus, verbunden werden können. Die untergeordneten Steuereinheiten 21, 23,25 sind jeweils über Montageplatten 33, 35, 37 an der Vorrichtung, 601, insbesondere an den Elektromotoren635, 643,651 angebracht. Die zuvor erwähnten ferritische Abschirmung sind in den Figuren 1 bis 4 nicht dargestellt, können jedoch insbesondere über die Montageplatten 33 ,35, 37 an die Steueruntereinheiten 23, 25, 27 angebracht werden.

Der Ausgabebereich ist mit der Bezugs 39 versehen und erstreckt sich insbesondere von dem Abförderradpaar 615 in Förderrichtung F über die Vorrichtung 601 hinaus. Der Ausgabebereich innerhalb der Vorrichtung wird insbesondere durch einen sich in Förderrichtung F weitenden Ausgabetrichter 41 begrenzt. Als Ausgabebereich außerhalb der Vorrichtung 601 wird insbesondere der Bereich bis zu 10 cm ,20 cm, 30 cm, 40 cm, 50 cm, 60 cm, 70 cm oder 80cm außerhalb der Vorrichtung 601 insbesondere außerhalb des Ausgabetrichters 41 angesehen. Dieser Bereich ist vorzugsweise frei von Maschinenteilen, um ein ungestörtes Greifen des manipulierten Verpackungsmaterials durch eine Bedienperson zu ermöglichen. Ferner ist vorzugsweise ein Netzteil 43 für die Stromversorgung wenigstens einer der Steuereinheiten 15, 21, 23 und 25 vorgesehen.

Vorzugsweise ist der Abtrieb des Antriebs 635 des Zuförderradpaars 613 über ein Getriebe 637, insbesondere ein Schneckengetriebe, mit dem Zuförderradpaar 613, insbesondere mit einer Antriebswelle 639 eines Zuförderrades, insbesondere des angetriebenen Zuförderrades 641, gekoppelt.

Mit Förderrichtung F ist vorzugsweise die Richtung gemeint, in die der Verpackungsmaterialstrang von dem Zuförderradpaar 613 zu dem Abförderradpaar 615 gefördert wird. In der hier dargestellten bevorzugten Ausführungsform wird der Verpackungsmaterialstrang direkt, d.h. ohne Umlenkung desselben, von dem Zuförderradpaar 613 zum dem Abförderradpaar 615 gefördert. Es sei jedoch klar, dass in einer weniger bevorzugten Ausführungsform der Verpackungsmaterialstrang zwischen den Förderradpaaren 613, 615 auch umgelenkt werden kann. Im weiteren Sinn ist daher unter Förderrichtung F die Richtung zu verstehen, in die der Verpackungsmaterialstrang flussaufwärts und flussabwärts der Fördereinrichtung, insbesondere der Schneide 605, gefördert wird. Beispielsweise wäre bei mehreren Umlenkvorrichtungen zwischen den Förderradpaaren 613, 615 die Förderrichtung F durch die Richtung definiert, in die der Verpackungsmaterialstrang von der der Schneide 605 stromaufwärts nahestehenden und der der Schneide 605 stromabwärts nahestehen Umlenkvorrichtung gefördert wird. Bei den vorherigen und den nachfolgenden Angaben zur Anordnung in Förderrichtung F flussaufwärts und flussabwärts der Ablängvorrichtung bzw. der Schneide 605 ist vorzugsweise stets der Zustand des Schneidens zu berücksichtigen, in dem die Schneide 605 im Schnitteingriff mit dem Verpackungsmaterialstrang gerät. Bei der bevorzugten Ausführungsform, bei der die Schneide 605 translatorisch verfährt, kann somit eine sich entlang der Schneidrichtung S erstreckende Gerade als Referenz für die flussaufwärtige und flussabwärtige Anordnung von Bauteilen angesehen werden. Bei Ausführungsformen, bei denen die Schneide nur im Schnitteingriff translatorisch verfährt oder auch rein rotatorisch verfährt, ist für die Beurteilung der stromaufwärtigen und stromabwärtigen Positionierung von Bauteilen zur Schneide 605 eine sich zum Zeitpunkt des Schnitteingriffes in Schnittrichtung S erstreckende Linie zu berücksichtigen. Die Schnittrichtung S ist die Richtung, in die die Schneide 605 im Schnitteingriff mit dem Verpackungsmaterialstrang in diesen eindringt. Bei einer rein rotatorisch geführten Schneide 605 wäre demnach die Tangente im Schnitteingriff als Schneidrichtung S zu berücksichtigen.

Das Abförderradpaar wird über einen eigenen Antrieb 643, insbesondere Elektromotor, angetrieben. Der Abtrieb des Antriebs 643 ist über ein Getriebe 645 mit dem Abtriebsradpaar 615, insbesondere mit einer Antriebswelle 647 eines angetriebenen Abförderrades 649, gekoppelt.

Die Ablängvorrichtung 603 wird über einen Antrieb 651, insbesondere in Form eines Elektromotors, angetrieben. In Fig.1 erstreckt sich der Elektromotor 651 der Ablängvorrichtung 603 in die Zeichenebene und in Schneidrichtung S. Der Abtrieb des Antriebs 651 der Ablängvorrichtung 603 ist über ein Getriebe 653, insbesondere ein ablängvorrichtungseigenes Getriebe, mit der Ablängvorrichtung 603 gekoppelt. In der hier dargestellten Ausführungsform umfasst das Getriebe 653 der Ablängvorrichtung 603 ein Übersetzungsgetriebe 655, zum Übersetzen oder Untersetzen der Abtriebsbewegung des Antriebs 651. Ferner umfasst das ablängvorrichtungseigene Getriebe 653 ein Umwandlungsgetriebe 657 zum Umwandeln einer Drehbewegung in eine translatorische Bewegung, insbesondere in Schneidrichtung S.

Vorzugsweise weist die Schneide 605 mehrere Schneidzacken 663 auf. Vorzugsweise weist die Schneide 605 sieben Schneidzacken 663 auf. Die Schneidzacken schließen insbesondere in einer Richtung quer zur Förderrichtung F, insbesondere orthogonal dazu, und quer zur Schneidrichtung S, insbesondere orthogonal dazu aneinander an. Dabei können sich die Zacken über die gesamte Tiefe T der Schneide 605 erstrecken. Die Tiefe T der Papierpolstererzeugnismaschine ist in den Zeichnungen die aus der Zeichenebene herauszeigende Richtung. Die Tiefe T verläuft vorzugsweise quer, insbesondere orthogonal, zur Schneidrichtung S und zur Förderrichtung F.

Besonders bevorzugt erstrecken sich die Zacken 663 im Wesentlichen über die gesamte Tiefe T des Förderkanals 619. Unter der gesamten Tiefe T ist nicht zu verstehen, dass die Schneide 605 entlang der nicht dargestellten oberen und unteren Begrenzungswandung schleifen. Vielmehr ist vorzugsweise im Übergangsbereich zwischen der oberen und unteren Begrenzungswandung und der Schneide ein entsprechender Spalt vorgesehen, sodass die Schneide 605 gegenüber der oberen und unteren Begrenzungswandung kontaktfrei verfährt. Schneidzacken 663 sind vorzugsweise als in Schneidrichtung S spitz zulaufende Dreiecke ausgebildet, die sich vorzugsweise pyramidenförmig in Förderrichtung F über die Dicke der Schneide verjüngen. Die in der Tiefe T an die obere und untere Begrenzungswandung anschließenden Schneidzacken gehen in der zur Schneidrichtung S entgegengesetzten Richtung insbesondere fluchtend in einen Montageabschnitt 665 der Schneide 605 über. Die Schneide 605 ist, insbesondere über den Montageabschnitt 665 mit einem Schlitten 667 der Ablängvorrichtung 603 verbunden, insbesondere verschraubt. Für die Befestigung der Schneide 605 an dem Schlitten 667 sind vorzugsweise Bohrungen 669 im Montageabschnitt 665 der Schneide 605 vorgesehen. Über die Bohrungen 669 ist die Schneide vorzugsweise mit Schrauben oder Nieten mit dem Schlitten 667 der Schneide verbunden. Der Schlitten fährt insbesondere in Schneidrichtung S.

Das Umwandlungsgetriebe 657 der Ablängvorrichtung 603 umfasst vorzugsweise zwei drehbeweglich, insbesondere um eine sich in Förderrichtung F erstreckende Drehachse D1, miteinander verbundenen Gelenksabschnitte 671, 673. Die Gelenksabschnitte 671, 673 sind jeweils vorzugsweise über ein Ende miteinander verbunden. Ein Gelenksabschnitt 673 ist in Förderrichtung dem Schlitten 667 zugewandt. Der andere Antrieb 651 ist insbesondere dem Übersetzungsgetriebe 655 des Antriebs 651 zugewandt. Der dem Schlitten 667 zugewandte Gelenksabschnitt 673 ist an seinem der Drehachse D1 abgewandten Ende über eine, sich insbesondere in Förderrichtung F erstreckende Drehachse D2 beweglich an den Schlitten 667 angelenkt. Der dem Antrieb 651, insbesondere dem Übersetzungsgetriebe 655 zugewandte Gelenksabschnitt 671 ist über eine sich insbesondere in Förderrichtung F erstreckende Drehachse D3 an das Übersetzungsgetriebe 655 angelenkt. Ferner weist die Ablängvorrichtung 603 vorzugsweise eine Führung 675 in Schneidrichtung S auf. Die Führung umfasst vorzugsweise einen sich insbesondere in Schneidrichtung S erstreckenden Zylinder 677 und einen in Schneidrichtung S entlang des Zylinders 677 verfahrbaren Schlittenschuh 679. Der Schlittenschuh 679 ist vorzugsweise fest mit dem Schlitten 667 verbunden. Besonders bevorzugt ist die Führung der Schneide 605 in Förderrichtung F stromabwärts der Schneide 605 und das Getriebe 653, insbesondere das Umwandlungsgetriebe 657, in Förderrichtung F stromaufwärts des Schneide 605 angeordnet. In der dargestellten Ausführungsform ist zwischen der Drehachse D3 und dem Antrieb 651 ein Übersetzungsgetriebe 655 zum Übersetzen der Antriebsdrehbewegung vorgesehen. Vorzugsweise ist das Übersetzungsgetriebe 655 ein Schneckengetriebe. Ferner kann das Getriebe 655 zusätzlich dazu ausgelegt, sein die Drehachse des Antriebs 651 zu versetzen, insbesondere um 90° auf die Drehachse D3 zu versetzen.

In Förderrichtung F auf Höhe der Ablängvorrichtung 603 erstreckt sich ein Förderkanal 619, der durch eine Begrenzungswandung 617 begrenzt ist. Vorzugsweise erstreckt sich der Förderkanal 619 in Förderrichtung stromaufwärts und stromabwärts der Ablängvorrichtung bis zu dem Zuförderradpaar 613 und dem Abförderradpaar 615, vorzugsweise über die Förderradpaare hinaus. In der Begrenzungswandung 617 ist ein Spalt 629 derart ausgestaltet, dass die Schneide 605 kontaktfrei in den Spalt 629 ein- und ausfahren kann.

Wie zuvor beschrieben, wird der Förderkanal 619 in Förderrichtung F flussaufwärts des Spaltes 605 durch einen flussaufwärtigen Wandungsabschnitt 621 und flussabwärts des Spaltes 629 durch einen flussabwärtigen Wandungsabschnitt 625 begrenzt. Wenn zuvor oder nachfolgend von einem Durchfahren des Förderkanals 619 in Schneidrichtung S die Rede ist, ist darunter insbesondere zu verstehen, dass die Schneide den durch den flussaufwärtigen Wandungsabschnitt 621 begrenzten Abschnitt des Förderkanals 619 durchfährt. Insbesondere soll sich die Schneide in der Schneidstartstellung in Schneidrichtung S außerhalb des Förderkanals 619 befinden, um beim Fördern des Verpackungsmaterialstrangs 611 zwischen den Förderradpaaren 613, 615 ein Hängenbleiben an der Schneide 605, insbesondere an der Schneidspitze 631 zu vermeiden.

Vor dem Abtrennen des Verpackungsmaterialerzeugnisses von dem Verpackungsmaterialstrang erstreckt sich der Verpackungsmaterialstrang zwischen den Förderradpaaren 613, 615. Die Schneide 605 durchfährt den Förderkanal 619 vorzugsweise rein translatorisch. Insbesondere verfährt die Schneide 605 dabei quer, vorzugsweise orthogonal zur Förderrichtung. Vorzugsweise ist die Vorrichtung derart orientiert, dass die Schneide 605 den Förderkanal 619 horizontal durchfährt. Unter Durchfahren ist dabei insbesondere zu verstehen, dass die Schneide beim Verfahren aus der Schneidstartstellung in die Schneidendstellung in Schneidrichtung S von einer Seite in den Förderkanal 619 einfährt und über die gegenüberliegende Seite in Schneidrichtung S aus dem Förderkanal 619 ausfährt. Das Einfahren in den Förderkanal 619 erfolgt insbesondere über einen Rückzugsspalt 633, der in der Begrenzungswandung 617 eingebracht ist. Das Ausfahren aus dem Förderkanal 619 erfolgt insbesondere über einen Spalt 629, der in der Begrenzungswandung 617 eingebracht ist.

Vorzugsweise weist die Begrenzungswandung 617 in Förderrichtung F stromaufwärts des Zuförderradpaars 613 und/oder des Abförderradpaars 615 einen trichterförmigen Abschnitt 659, 661 auf, der sich in Förderrichtung F verjüngt. Vorzugsweise tritt die Verjüngung des trichterförmigen Abschnitts 659, 661 in Schneidrichtung S auf. Alternativ oder zusätzlich kann die Verjüngung in eine zur Förderrichtung und zur Schneidrichtung orthogonale Richtung ausgebildet sein. Der trichterförmige Abschnitt 659, 661 kann rund oder eckig sein. In der hier dargestellten Ausführungsform ist der trichterförmige Abschnitt eckig und weist lediglich eine Verjüngung in Schneidrichtung S auf. Die Verjüngung des Förderkanals 619 ist vorzugsweise in dem Bereich des Förderkanals 619 ausgebildet, in dem der Verpackungsmaterialstrang 619 mit dem Zuförderradpaar 613 und/oder dem Abförderradpaar 615 in Eingriff kommt. Durch die Verjüngung des Förderkanals 619 kann einerseits der Umformgrad von der im Wesentlichen zweidimensionalen Papierbahn in dem dreidimensionalen Verpackungsmaterialstrang erhöht werden und der Eingriff mit dem Förderradpaaren 613, 615 erleichtert werden.

Die Vorrichtung 601 weist einen Förderkanal 619 auf, der durch eine Begrenzungswandung 617 begrenzt ist. Besonders bevorzugt erstreckt sich der Förderkanal 619 in Förderrichtung F wenigstens zwischen den zwei Förderradpaaren 613, 615. In einer weniger bevorzugten Ausführungsform erstreckt sich der Förderkanal zumindest auf Förderrichtungshöhe der Ablängvorrichtung bzw. der Schneide 605. Dabei kommt es insbesondere darauf an, den Förderkanal 619 insbesondere unmittelbar stromaufwärts und stromabwärts der Schneide 605 zu begrenzen. Der Förderkanal 619 ist durch eine Begrenzungswandung 617 begrenzt. In der Begrenzungswandung 617 ist ein Spalt 629 derart ausgestaltet, dass die Schneide 605 kontaktfrei in den Spalt 627 ein- und ausfahren kann. In Förderrichtung F flussaufwärts des Spaltes 629 ist der Förderkanal durch einen Wandungsabschnitt 621 begrenzt, der eine den Spalt in Förderrichtung F flussaufwärts begrenzende flussaufwärtige Konterkante 623 aufweist. In Förderrichtung flussabwärts des Spaltes 629 ist der Förderkanal 619 durch einen flussabwärtigen Wandungsabschnitt 625 begrenzt, der eine den Spalt 629 in Förderrichtung F flussabwärts begrenzende flussabwärtige Konterkante 627 aufweist.

Die Vorrichtung 601 kann zusätzlich einen in der Begrenzungswandung 617 ausgebildeten Rückzugsspalt 633 aufweisen, der derart ausgestaltet ist, dass die Schneide, insbesondere kontaktfrei, in den Förderkanal 619 ein- und ausfahren kann. Der Rückzugsspalt 633 ist vorzugsweise an einem dem Spalt in Schneidrichtung S gegenüberliegenden Abschnitt der Begrenzungswandung 617 ausgebildet. Besonders bevorzugt ist der Rückzugsspalt 633 und/oder der dem Spalt 629 gegenüberliegende Abschnitt der Begrenzungswandung 617 wie der Spalt 629 und/oder wie die den Spalt umgebenden Wandungsabschnitte ausgebildet. Darunter ist insbesondere zu verstehen, dass der Förderkanal 619 in Förderrichtung F flussaufwärts des Rückzugsspaltes 633 von einem flussaufwärtigen Wandungsabschnitt 621' begrenzt ist, der eine dem Rückzugsspalt 633 in Förderrichtung flussaufwärts begrenzende flussaufwärtige Konterkante 623' aufweist. Alternativ oder zusätzlich ist darunter zu verstehen, dass der Förderkanal 619 in Förderrichtung F flussabwärts des Rückzugsspaltes 633 von einem flussabwärtigen Wandungsabschnitt 625' begrenzt ist, der eine den Rückzugsspalt 633 in Förderrichtung F flussabwärts begrenzende flussabwärtige Konterkante 627' aufweist. Vorzugsweise ist die Schneide 605 beim Ein- und Ausfahren in den Spalt in Förderrichtung F von der flussaufwärtigen Konterkante 623' beabstandet und/oder in Förderrichtung F von der flussabwärtigen Konterkante 627' beabstandet.

Vorzugsweise ist eines der Zuförderräder des Zuförderradpaars nicht direkt von dem Antrieb 635 angetrieben. Das nicht direkt angetriebene Zuförderrad 301 wird vorzugsweise indirekt über das angetriebene Zuförderrad 641 angetrieben. Besonders bevorzugt wird dies dadurch erreicht, dass das unangetriebene Zuförderrad 301 gegen das angetriebene Zuförderrad 641 vorgespannt ist. Wie insbesondere in den Figuren 1 bis 4 zu sehen ist, wird die Vorspannung insbesondere durch Unterdimensionierung des Abstandes der Radachsen 303, 305 zueinander realisiert. Durch die Unterdimensionierung des Zuförderradachsabstandes ZA werden die Förderräder elastisch gegeneinander vorgespannt. Zur Einstellung des Zuförderradachsabstandes ZA kann vorzugsweise wenigstens eines der Zuförderräder 641, 301 relativ zu dem anderen Zuförderrad bewegt bzw. mit diesem verspannt werden. Vorzugsweise ist dafür eine Spannvorrichtung 607 vorgesehen, mit der eines der Zuförderräder 641, 301 über Wandungsabschnitte der Vorrichtung 601 mit dem anderen Zuförderrad 301, 641 verspannt werden. Die Spannvorrichtung umfasst vorzugsweise ein das Zuförderrad 301 mit der nicht dargestellten unteren und oberen Begrenzungswandung verbindende Radaufnahme 309 und wenigstens ein, vorzugsweise zwei, die Radwelle 311 des Zuförderrades 301 mit der Radaufnahme 309 verbindendes Befestigungsmittel 313, wie eine Schraube 313 (nur bei dem Abförderradpaar 615 gezeigt). Wie in Figur 1 dargestellt, ist die Spannvorrichtung 307 vorzugsweise an dem nicht angetriebenen Zuförderrad 301 angebracht. Somit kann der Zuförderradachsabstand ZA, beispielsweise durch Betätigen des Befestigungsmittels 313 angepasst werden, während das angetriebene Zuförderrad 641 gegenüber dem Antrieb 635 in einer konstanten Stellung verbleibt. Somit kann insbesondere die Spannung zwischen den Zuförderrädern, insbesondere in Abhängigkeit des zu verarbeitenden Faserausgangsmaterials oder der gewünschten Verpackungsmaterialerzeugnisgeometrie angepasst werden, insbesondere ohne den Entwicklungsaufwand der Vorrichtung 601 wesentlich zu erhöhen.

Alternativ oder zusätzlich sind die Abförderräder 649, 315 gegeneinander verspannt. Besonders bevorzugt wird die Spannung zwischen den Abförderrädern 315, 649 über einen unterdimensionierten Abförderradachsabstand AA zwischen der Radachse 317 des angetriebenen Abförderrades 649 und der Radachse 319 des unangetriebenen Abförderrades 315 eingestellt. Der Abförderradachsabstand AA kann wie für das Zuförderradpaar 613 beschrieben über eine Spannvorrichtung 321 eingestellt werden. Die Spannvorrichtung 321 des Abförderradpaares 615 weist vorzugsweise ebenfalls eine Radaufnahme 323 auf, mit der die Abtriebswelle 325 eines Abtriebsrades 315, 649 an der Vorrichtung 601 befestigt wird und ein Verbindungsmittel 313 zum Verbinden der Radwelle 325 mit der Radaufnahme 323 der Spannvorrichtung 321.

Unter einem unterdimensionierten Radachsabstand ist insbesondere zu verstehen, dass der Abstand der Radachsen 303, 305, 317, 319 eines Radpaares kleiner ist, als die Summe der Radien beider Räder, insbesondere im demontierten Zustand. Dies kann insbesondere durch eine gewisse Elastizität der Förderräder gewährleistet werden. Daher ist es bevorzugt, die Förderräder aus einem Elastomerkörper, wie einem PU-Schaumkörper auszubilden oder diese mit einem elastisch deformierbaren Abrollbereich an deren Außenumfang zu versehen. Die Elastizität der Förderräder kann ferner dadurch erhöht werden, dass mehrere, insbesondere zwischen sechs und vierzehn, Ausnehmungen 327, insbesondere in Umfangsrichtung gleichmäßig verteilte Ausnehmungen 327, eingebracht sind. Um eine weitestgehend drehstellungsunabhängige Elastizität der Förderräder zu gewährleisten, sind die Ausnehmungen 327 vorzugsweise in Umfangsrichtung gleichmäßig in die Förderräder eingebracht.

Die in den Figuren 1 bis 4 dargestellte Vorrichtung 601 zeigt den Zustand, in dem sich kein Verpackungsmaterialstrang im Eingriff mit den Förderradpaaren 613, 615 befindet. In diesem Zustand kontaktieren sich die Räder der Förderradpaare vorzugsweise durch die gegenseitige Verspannung in einer insbesondere kreisförmigen oder ellipsenförmigen Kontaktfläche. Sind die Förderradpaare 613, 615 hingegen im Eingriff mit dem Verpackungsmaterialstrang, so sind die jeweiligen Förderräder vorzugsweise durch den Verpackungsmaterialstrang voneinander getrennt. In einer weniger bevorzugten Ausführungsform tangieren die Förderräder sich lediglich oder sind voneinander beabstandet, sodass eine Kraftübertragung zwischen den Förderrädern eines Förderradpaars 613, 615 erst entsteht, wenn der Verpackungsmaterialstrang mit dem jeweiligen Förderradpaar in Eingriff ist. Vorzugsweise sind die Radachsen 317, 319 des Abförderradpaars und/oder die Radachsen 303, 305 des Zuförderradpaars derart zueinander ausgerichtet, dass die Tangente TAZ des Zuförderradpaars und/oder die Tangente des Abförderradpaars TAA parallel zur Förderrichtung F verlaufen. Unter Tangente soll in diesem Zusammenhang insbesondere nicht ausschließlich verstanden werden, dass sich die Förderräder lediglich tangieren, vielmehr soll auch bei der bevorzugten Ausführungsform, bei der eine Kontaktfläche zwischen den Förderrädern entsteht, eine sich in Förderrichtung zwischen dem ersten Kontaktpunkt und dem letzten Kontaktpunkt erstreckende Linie als Tangente angesehen werden.

In weniger bevorzugten Ausführungsformen können die Radachsen 303, 305, 317, 319 jeweils eines Radpaares 615, 613 derart zueinander versetzt sein, dass die Tangente TAZ des Zuförderradpaars und/oder die Tangente TAA des Abförderradpaars gegenüber der Förderrichtung F geneigt sind. Besonders bevorzugt sind die Radachsen jeweils eines Zuförderradpaars derart zueinander angeordnet, dass die Tangenten TAZ und TAA parallel zueinander verlaufen und besonders bevorzugt identisch sind. Dies kann insbesondere dadurch erreicht werden, dass die Radachsen 303, 305, 317, 319 jeweils eines Radpaares 613, 615 insbesondere in Schneidrichtung S übereinander angeordnet sind.

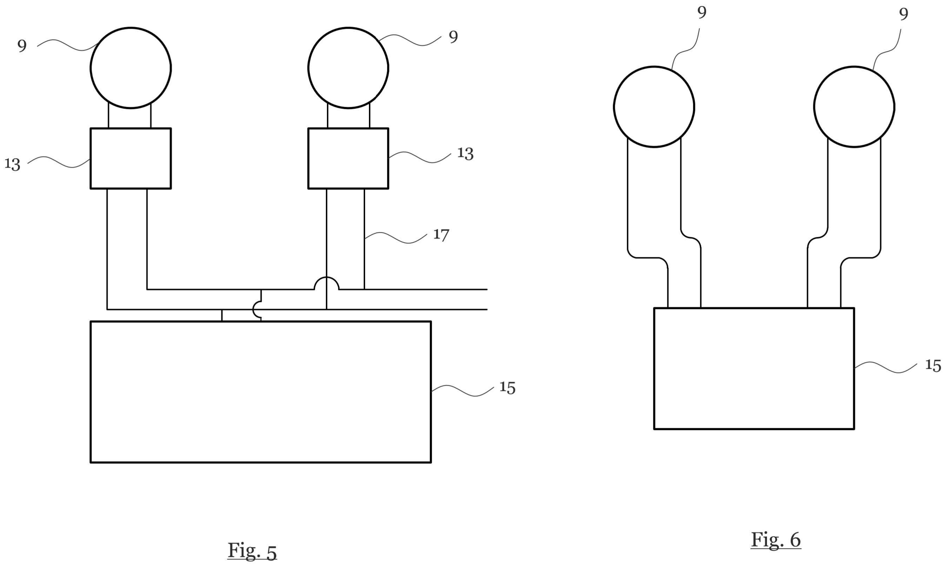

Beim Vergleich von Figur 5 und Figur 6 wird ein Unterschied zwischen der Vorrichtung bzw. dem Verfahren gemäß dem zweiten und vierten Aspekt der vorliegenden Erfindung deutlich. Figur 6 zeigt die konventionelle Ansteuerung von Elektromotoren 9 über eine Steuereinheit 15. Bei dieser konventionellen Ausführungsform muss die Steuereinheit 15 je nach Anzahl und Art der anzusteuernden Elektromotoren 9 neu ausgelegt werden. Dies führt insbesondere zu erhöhten Entwicklungskosten, da die Steuerung 15, insbesondere beim Einsatz von bürstenlosen Gleichstrommotoren eine Regelung des Motors erfordert. Demgegenüber kann durch Einsatz von elektromotoreigenen Steueruntereinheiten 13 nicht nur die Flexibilität der Vorrichtung 601 erhöht werden, sondern auch die Entwicklungskosten der Vorrichtung 601 reduziert werden, da durch Übernahme von Steuer- und Regelaufgaben durch die Steueruntereinheiten 13 die Anforderungen an die übergeordnete Steuereinheit 15 gesenkt werden können. Insbesondere macht die Verwendung von elektromotoreigenen Steueruntereinheiten 13 die Verwendung von bürstenlosen Gleichstrommotoren besonders interessant, da die erhöhte Lebenszeit gegenüber Bürstenmotoren durch die Flexibilität hinsichtlich der Vorrichtung 601 in der die Motoren eingesetzt werden können besser ausgenutzt werden kann.

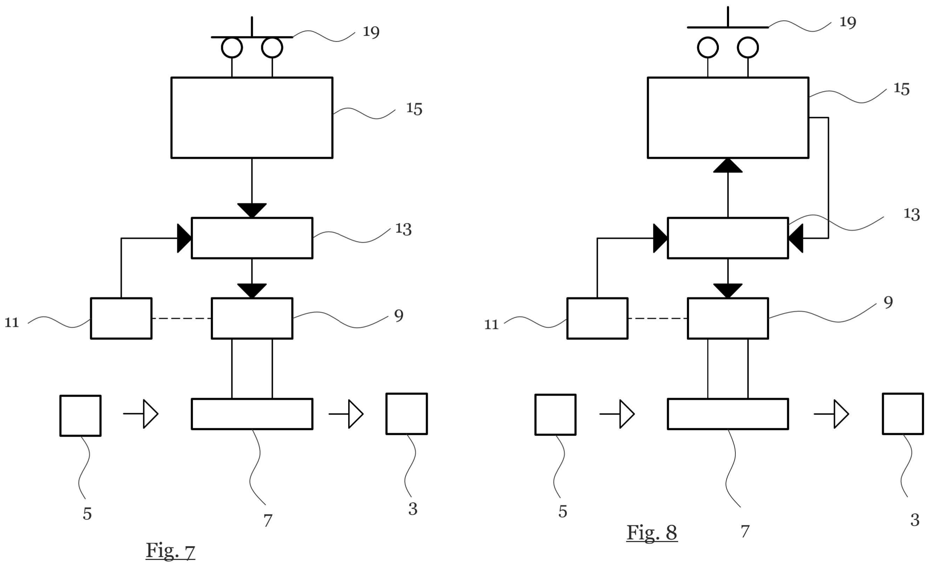

Figur 7 ist eine schematische Darstellung der Kommunikation zwischen übergeordnete Steuereinheit 15, elektromotoreigene Steueruntereinheit 13, Elektromotor 9, Positionserfassungseinrichtung 11 und Arbeitseinrichtung 7. Gemäß dem ersten und dritten Aspekt der vorliegenden Erfindung ist in Figur 6 ein Elektromotor 9 dargestellt, der über eine Positionserfassungseinrichtung 11, wie beispielsweise eine Sensoranordnung, die drei um jeweils 120° zueinander versetzt angeordnete Hallsensoren aufweist, die Position des Rotors des Elektromotors 9 erfassen kann. Vorzugsweise werden dazu in den Sensoren durch eine Drehbewegung des Rotors induzierte Signale, wie Spannungen, gemessen und durch eine Auswertevorrichtung, die vorzugsweise in der Steueruntereinheit 13 ausgeführt ist, die Position des Rotors durch Auswertung der Signale ermittelt. In Abhängigkeit der ermittelten Rotorposition wird dann eine Spulenanordnung im Wechsel mit einer Erregerspannung beaufschlagt, um den Rotor in Rotation zu versetzen. Der Rotor treibt wiederum die Arbeitseinrichtung 7 an. Wie in Figur 6 dargestellt, kann die Bereitstellung von Verpackungsmaterial hierbei durch Betätigung eines Schalters 19 ausgelöst werden.

Gemäß dem zweiten und vierten Aspekt der vorliegenden Erfindung ist in Figur 7 eine elektromotoreigene Steueruntereinheit 13 zum Steuern und/oder Regeln eines Elektromotors 9, der eine Arbeitseinrichtung 7 antreibt, vorgesehen. Ferner ist eine übergeordnete Steuereinheit 15 zum Ansteuern der Steueruntereinheit 13 vorgesehen. Zum Initiieren der Bereitstellung von Verpackungsmaterial 3, insbesondere durch Manipulation eines Faserausgangsmaterials 5, kann der Schalter 19, wie in Figur 6 gezeigt, betätigt werden. Daraufhin steuert die übergeordnete Steuereinheit 15 die elektromotoreigene Steueruntereinheit 13 an, die wiederum den Elektromotor steuert und/oder regelt.

Figur 8 zeigt im Wesentlichen die schematische Darstellung aus Figur 7, mit dem Unterschied, dass hier die Bereitstellung von Verpackungsmaterial 3 initiiert wird ohne den Schalter 19 zu betätigen. Dafür wird ein Verfahren gemäß dem fünften Aspekt der vorliegenden Erfindung eingesetzt wonach durch Betätigen von insbesondere bereits manipuliertem Verpackungsmaterial 3 die Bereitstellung von insbesondere zusätzlichen Verpackungsmaterial 3 durch Manipulation von Faserausgangsmaterial 5 initiiert wird. Dabei wird insbesondere durch die Betätigung des manipulierten Verpackungsmaterials 3 die Arbeitseinrichtung 7, insbesondere ein Förderrad 649 eines Abförderradpaars 615, wie beispielsweise in den Figuren 1 bis 4 dargestellt, mit einer Drehbewegung beaufschlagt. Dies wird insbesondere dadurch realisiert, dass das manipulierte Verpackungsmaterial 3 noch im Eingriff mit den gegeneinander verspannte Förderrädern 649 und 315 ist, sodass durch Ziehen an dem Verpackungsmaterial 3 die Förderräder 649,315 das Abförderradpaars 615 in Drehung versetzt werden. Durch die mechanische Kopplung der Arbeitseinrichtung in Form des angetriebenen Abförderrades 649 mit dem Elektromotor 9,643 wird der Rotor des Elektromotors 9, 643 mit einer Drehbewegung beaufschlagt. Diese Drehbewegung wird von der Positionserfassungsvorrichtung 11 erfasst und an die elektromotoreigene Steueruntereinheit 13 übertragen. Daraufhin überträgt die elektromotoreigene Steueruntereinheit 13 ein Auslösesignal an die übergeordnete Steuereinheit 15, woraufhin die Steuereinheit 15 die elektromotoreigene Steueruntereinheit 13 zum Bereitstellen von Verpackungsmaterial 3 durch Manipulation von Faserausgangsmaterial 5 ansteuert.

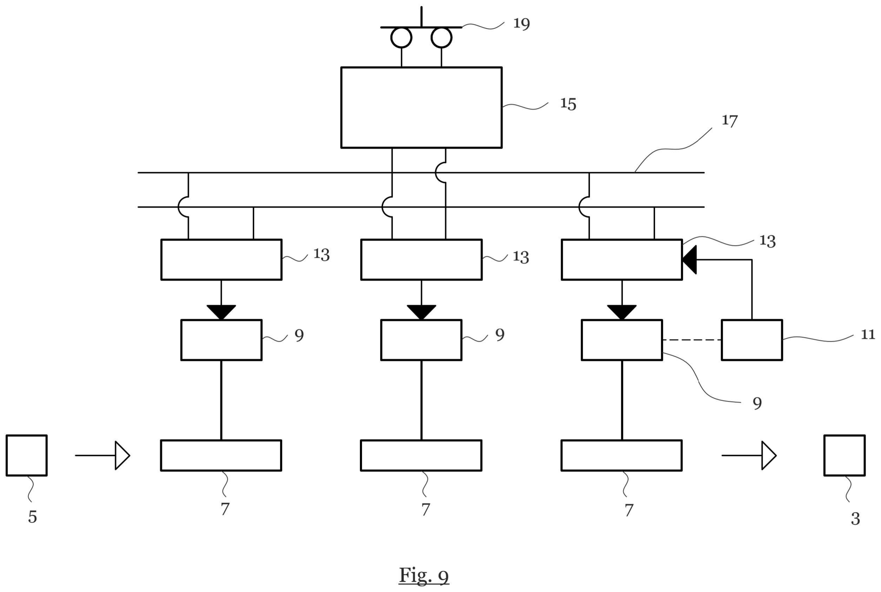

Figur 9 zeigt eine schematische Darstellung von drei Arbeitseinrichtungen 7, die jeweils über einen Elektromotor 9 angetrieben werden, der wiederum jeweils über eine elektromotoreigene Steueruntereinheit 13 gesteuert und/oder geregelt wird. Die drei elektromotoreigenen Steueruntereinheiten 13 werden von einer übergeordneten Steuereinheit 15 angesteuert. Die übergeordnete Steuereinheit 15 und die elektromotoreigenen Steueruntereinheiten 13 sind über eine Kommunikationsverbindung 17 zum Datenaustausch miteinander verbunden. Eine derartige Freischaltung der einzelnen Einheiten könnte insbesondere genutzt werden um eine Vorrichtung, wie sie den Figuren 1 bis 4 dargestellt ist, zu betreiben. Dabei kann die zuvor beschriebene Bereitstellung von Verpackungsmaterial 3 durch Manipulation von Faserausgangsmaterial 5 durch Betätigung des Schalters 19 erfolgen oder Durch betätigen von manipulierten Verpackungsmaterial 3 im Ausgabebereich 39 der Vorrichtung 601, insbesondere gemäß dem fünften Aspekt der vorliegenden Erfindung.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 3: Verpackungsmaterial
- 5: Faserausgangsmaterial
- 7: Arbeitseinrichtung
- 9: Elektromotor
- 11: Positionserfassungseinrichtung
- 13: elektromotoreigene Steueruntereinheit
- 15: übergeordnete Steuereinheit
- 17: Kommunikationsverbindung
- 19: Schalter
- 21: Steueruntereinheit des Zuförderradpaars
- 23: Steueruntereinheit des Abförderradpaars
- 25: Steueruntereinheit der Ablängvorrichtung
- 27: Anschluss der Steueruntereinheiten des Zuförderradpaars
- 29: Anschluss der Steueruntereinheit des Abförderradpaars
- 31: Anschluss der Steueruntereinheit der Ablängvorrichtung
- 33: Montageplatte für die Steueruntereinheit 21
- 35: Montageplatte für die Steueruntereinheit 23
- 37: Montageplatte für die Steueruntereinheit 25
- 39: Ausgabebereich
- 41: Ausgabetrichter
- 43: Netzteil
- 301: unangetriebenes Zuförderrad
- 303: Radachse des unangetriebenen Zuförderrades
- 305: Radachse des angetriebenen Zuförderrades
- 307: Spannvorrichtung des Zuförderradpaars
- 309: Radaufnahme der Spannvorrichtung 307
- 311: Radwelle des unangetriebenen Zuförderrades 301
- 313: Verbindungsmittel der Spannvorrichtung
- 315: unangetriebenes Abförderrad
- 317: Radachse des angetriebenen Abförderrades
- 319: Radachse des unangetriebenen Abförderrades
- 321: Spannvorrichtung des Abförderradpaars
- 323: Radaufnahme der Spannvorrichtung 321
- 325: Radwelle des unangetriebenen ab Förderrades
- 327: Ausnehmung in Förderrad
- 601: Vorrichtung
- 603: Ablängvorrichtung
- 605: Schneide
- 613: Zuförderradpaar
- 615: Abförderradpaar
- 617: Begrenzungswandung
- 619: Förderkanal
- 621, 621': flussaufwärtiger Wandungsabschnitt
- 623,623': flussaufwärtige Konterkante
- 625,625': flussabwärtiger Wandungsabschnitt
- 627,627': flussabwärtige Konterkante
- 629: Spalt
- 631: Schneidspitze
- 633: Rückzugsspalt
- 635: Antrieb, Elektromotor des Zuförderradpaars
- 637: Getriebe des Zuförderradpaars
- 639: Antriebswelle des angetriebenen Zuförderradpaars
- 641: angetriebenes Zuförderrad
- 643: Antrieb, Elektromotor des Abförderradpaars
- 645: Getriebe des Abförderradpaars
- 647: Antriebswelle des angetriebenen Abförderradpaars
- 649: angetriebenes Abförderrad
- 651: Antrieb, Elektromotor der Ablängvorrichtung
- 653: Getriebe der Ablängvorrichtung
- 655: Übersetzungsgetriebe
- 657: Umwandlungsgetriebe
- 659: trichterförmiger Abschnitt des Zuförderradpaars
- 661: trichterförmiger Abschnitt des Abförderradpaars
- 663: Schneidzacken
- 665: Montageabschnitt der Schneide
- 667: Schlitten der Schneide
- 669: Bohrungen in Schneide
- 671: Gelenksabschnitt (dem Übersetzungsgetriebe 655 zugewandt)
- 673: Gelenksabschnitt (dem Schlitten 667 zugewandt)
- 675: Führung der Schneide in Schneidrichtung
- 677: Führungszylinder
- 679: Schlittenschuh
- T: Tiefe der Papierpolstererzeugnismaschine
- F: Förderrichtung
- S: Schneidrichtung
- AA: Abförderradachsabstand
- ZA: Zuförderradachsabstand
- TAZ: Tangente des Zuförderradpaars
- TAA: Tangente des Abförderradpaars
- D1: Drehachse zwischen den zwei Gelenksabschnitten 671 und 673
- D2: Drehachse zwischen dem Gelenksabschnitt 673 und dem Schlitten 667
- D3: Drehachse zwischen dem Gelenksabschnitt 6 71 und dem Übersetzungsgetriebe 655

## Patentansprüche

1. Vorrichtung (601) zum Bereitstellen von Verpackungsmaterial, wie einen Wellpappenbahnabschnitt oder einen Papierpolstermaterialstrang, durch Manipulation, insbesondere Umformen, Fördern und/oder Abtrennen, eines Faserausgangsmaterials, wie einer ein- oder mehrlagigen Papierbahn oder einer Wellpappenbahn, umfassend:
wenigstens eine mechanisch anzutreibende Arbeitseinrichtung (7), wie eine Deformationseinrichtung, insbesondere ein Deformationsradpaar, eine Fördereinrichtung, insbesondere ein Förderradpaar (613, 615), oder eine Ablängvorrichtung (603), insbesondere ein Rotationsschneider oder ein Translationsschneider; und
wenigstens einen die Arbeitseinrichtung (7) antreibenden Elektromotor (9), **gekennzeichnet durch**
wenigstens eine elektromotoreigene Steueruntereinheit (13) zum Steuern- und/oder Regeln des Elektromotors (9),
eine übergeordnete Steuereinheit (15) zum Ansteuern der wenigstens einen Steueruntereinheit (13) und
eine Kommunikationsverbindung (17) zum Datenaustausch zwischen der wenigstens einen elektromotoreigenen Steueruntereinheit (13) und der übergeordneten Steuereinheit (15) mit der BUS-Technologie, wie der CAN-BUS-Technologie.

2. Vorrichtung nach Anspruch 1, **dadurch gekennzeichnet, dass** die Steueruntereinheit (13) einen den Elektromotor (9) ansteuernden Erregerstrom misst und bei überschreiten eines vorgegebenen, zulässigen Stromes, den Erregerstrom unterbricht, um insbesondere bei Verpackungsmaterialverstopfungen in der Vorrichtung (601) ein Überhitzen des Elektromotors, der Steueruntereinheit (13) und/oder der übergeordneten Steuereinheit (15) zu vermeiden.

3. Vorrichtung (601) nach Anspruch 1 oder 1, **dadurch gekennzeichnet, dass** die Steueruntereinheit (13) einen Frequenzumrichter, vorzugsweise einen ein-Phasen Frequenzumrichter mit einem Netzteil und einer Steuerung, aufweist.

4. Vorrichtung (601) nach einem der Ansprüche 1 bis 1,
**gekennzeichnet durch**
eine insbesondere ferritische Abschirmung, welche die wenigstens eine Steueruntereinheit (13) von der Umgebung gegenüber elektromagnetischen Störsendungen abschirmt, und/oder **durch**
eine insbesondere ferritische Abschirmung, welche die wenigstens eine Steueruntereinheit (13) und die übergeordnete Steuereinheit (15) und vorzugsweise zusätzlich den wenigstens einen Elektromotor (9) gegenüber elektromagnetischen Störsendungen abschirmt, und/oder **durch**
eine insbesondere ferritische Abschirmung der wenigstens einen Steueruntereinheit (13), des wenigstens einen Elektromotors (9), der übergeordneten Steuereinheit (15) und der wenigstens einen Arbeitseinrichtung (7), welche die wenigstens eine Steueruntereinheit (13), den wenigstens einen Elektromotor (9), die übergeordnete Steuereinheit (15) und die wenigstens eine Arbeitseinrichtung (7) gegenüber elektromagnetischen Störsendungen abschirmt, und/oder wobei vorzugsweise wenigstens eine ferritische Abschirmung **durch** das Gehäuse der Vorrichtung (601) ausgebildet ist.

5. Vorrichtung (601) nach einem der vorstehenden Ansprüche,
**dadurch gekennzeichnet, dass**
die Arbeitseinrichtung (7) eine Ablängvorrichtung (603) zum Abtrennen des manipulierten Verpackungsmaterials, insbesondere eines Papierpolstererzeugnisses von einem in der Vorrichtung (601) aus eine ein- oder mehrlagigen Papierbahn umgeformten, dreidimensionalen Papierpolsterstrangs oder eines Wellpappenbahnabschnitts von einer Wellpappenbahn, ist.

6. Vorrichtung (601) nach einem der vorstehenden Ansprüche,
**gekennzeichnet durch**
eine der Arbeitseinrichtung (7) in Förderrichtung (F) flussaufwärts angeordnete Zufördervorrichtung, wie ein Zuförderradpaar (613), zum Fördern des Verpackungsmaterials und vorzugsweise **durch**
einen zweiten die flussaufwärts angeordnete Zufördervorrichtung antreibenden Elektromotor (9) und vorzugsweise **durch**
eine zweite elektromotoreigene Steueruntereinheit (13) zum Steuern- und/oder Regeln des zweiten Elektromotors, wobei die zweite Steueruntereinheit (13) und die übergeordneten Steuereinheit (15) über die Kommunikationsverbindung (17) miteinander verbunden sind.

7. Vorrichtung (601) nach Anspruch 6, **gekennzeichnet durch** eine der Arbeitseinrichtung (7) in Förderrichtung (F) flussabwärts angeordnete Abfördervorrichtung, wie ein Abförderradpaar (615), zum Abfördern des Verpackungsmaterials und vorzugsweise **durch**
einen dritten die flussabwärts angeordnete Abfördervorrichtung antreibenden Elektromotor (9) und vorzugsweise **durch**
eine dritte elektromotoreigene Steueruntereinheit (13) zum Steuern- und/oder Regeln des dritten Elektromotors (9), wobei die dritte Steueruntereinheit (13) und die übergeordneten Steuereinheit (15) über die Kommunikationsverbindung (17) miteinander verbunden sind.

8. Vorrichtung (601) nach Anspruch 7, **dadurch gekennzeichnet, dass** der Zufördervorrichtung und der Abfördervorrichtung jeweils ein eigener Elektromotor (9) zum voneinander unabhängigen Antreiben und/oder Abbremsen der Fördervorrichtungen zugeordnet ist, wobei
die Elektromotoren vorzugsweise derart angetrieben werden, dass die Zufördervorrichtung und die Abfördervorrichtung das manipulierte Verpackungsmaterial, insbesondere vor einem Abtrennen eines Papierpolstererzeugnisses von einem in der Vorrichtung (601) aus eine ein- oder mehrlagigen Papierbahn umgeformten, dreidimensionalen Papierpolsterstrang, spannen und/oder dass
das Abförderradpaar (615) beim Auftreten einer Verpackungsmaterialverstopfung entgegengesetzt zur Förderrichtung (F) angetrieben wird.

9. Verfahren zum Bereitstellen von Verpackungsmaterial,
**dadurch gekennzeichnet, dass**
das Verfahren mit einer Vorrichtung(1) nach einem der Ansprüche 1 bis 8 durchgeführt wird.

10. Verfahren zum Betreiben einer Verpackungsmaterialbereitstellungsvorrichtung, bei dem durch Manipulation, insbesondere Umformen und/oder Fördern, eines Faserausgangsmaterials, wie einer ein- oder mehrlagigen Papierbahn oder einer Wellpappenbahn, Verpackungsmaterial, wie ein Papierpolstermaterialstrang oder ein Wellpappenbahnabschnitt, bereitgestellt wird, wobei die Verpackungsmaterialbereitstellungsvorrichtung (601) wenigstens eine mechanisch anzutreibende Arbeitseinrichtung (7) und wenigstens einen die Arbeitseinrichtung (7) antreibenden Elektromotor (9) aufweist, wobei wenigstens eine elektromotoreigene Steueruntereinheit (13) den Elektromotor, insbesondere mit einem Verfahren nach Anspruch 9, steuert und/oder regelt und eine übergeordnete Steuereinheit (15) über eine Kommunikationsverbindung (17) Daten mittels der Bus-Technologie, wie der CAN-BUS-Technologie, mit der elektromotoreigenen Steueruntereinheit (13) austauscht.

11. Verfahren nach einem der vorstehenden Ansprüche, **dadurch gekennzeich net**, dass das manipulierte, betätigte Verpackungsmaterial (3) vor dem Initiieren der Manipulation des Faserausgangsmaterials von dem Faserausgangsmaterial, wie einer ein- oder mehrlagigen Papierbahn oder einer Wellpappenbahn, oder einem aus einer ein- oder mehrlagigen Papierbahn umgeformten Papierpolsterstrang abgetrennt wird und/oder aus der Verpackungsmaterialbereitstellungsvorrichtung (601) herausgefördert wird.

12. Verpackungsmaterial, wie ein Papierpolstermaterialstrang oder ein Wellpappenbahnabschnitt, wobei das Verpackungsmaterial durch eine Vorrichtung gemäß einem der Ansprüche 1 bis 8 hergestellt ist und/oder gemäß einem Verfahren nach einem der Ansprüche 9 bis 11 hergestellt ist.
